(19) Europäisches Patentamt
European Patent Office
Office européen des brevets

(11) **EP 4 365 993 A1**

(12) **EUROPEAN PATENT APPLICATION**

(43) Date of publication:
**08.05.2024 Bulletin 2024/19**

(21) Application number: **23207596.0**

(22) Date of filing: **03.11.2023**

(51) International Patent Classification (IPC):
**H01M 4/58** (2010.01)         **H01M 4/62** (2006.01)

(52) Cooperative Patent Classification (CPC):
**H01M 4/625; H01M 4/5815**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 KR 20220146382**
**11.10.2023 KR 20230134738**

(71) Applicant: **Samsung SDI Co., Ltd.**
**Yongin-si, Gyeonggi-do 17084 (KR)**

(72) Inventors:
• **Lee, Jieun**
  **17084 Gyeonggi-do (KR)**
• **Son, Inhyuk**
  **17084 Gyeonggi-do (KR)**
• **Jo, Sungnim**
  **17084 Gyeonggi-do (KR)**
• **Shim, Kyueun**
  **17084 Gyeonggi-do (KR)**
• **Park, Taehyun**
  **17084 Gyeonggi-do (KR)**

(74) Representative: **Michalski Hüttermann & Partner Patentanwälte mbB**
**Kaiststraße 16A**
**40221 Düsseldorf (DE)**

(54) **COMPOSITE CATHODE ACTIVE MATERIAL, METHOD OF PREPARING THE SAME, CATHODE INCLUDING THE SAME, AND ALL-SOLID SECONDARY BATTERY INCLUDING THE SAME**

(57)     A composite cathode active material, a method of preparing the composite cathode active material, a cathode including the composite cathode active material, and an all-solid secondary battery, are provided. The composite cathode active material may include a core including a lithium-containing sulfide-based cathode active material; and a shell conforming to a surface of the core, where the shell may include at least one first metal oxide represented by formula $M_aO_b$ ($0<a\leq3$ and $0<b<4$, wherein if a is 1, 2, or 3, b is not an integer); and a carbonaceous material, the first metal oxide may be disposed within a matrix of the carbonaceous material, and M may be at least one metal selected from among Groups 2 to 16 in the Periodic Table of Elements.

EP 4 365 993 A1

**Description**

**BACKGROUND**

**1. Field**

One or more embodiments, the present disclosure relate to a composite cathode active material, a method of preparing the composite cathode active material, a cathode including the composite cathode active material, and an all-solid secondary battery.

**2. Description of the Related Art**

In line with recent requirements in energy industry, batteries with relatively high energy density and stability are actively being developed. For example, lithium batteries are commercialized not only in the fields related to information-related devices and communication devices, but also in the automobile industry. In the automobile industry, safety is greatly emphasized as it affects human wellbeing.

Because some lithium batteries utilize an electrolyte containing a flammable organic solvent as a solvent, such lithium batteries may overheat and/or may catch fire in the event of a short circuit.

Thus, an all-solid battery utilizing a solid electrolyte, instead of a liquid electrolyte solution, is desired.

An all-solid battery, due to not utilizing a flammable organic solvent, may significantly decrease the risk of a fire or a run-away reaction (e.g., explosion) even in the event of a short-circuit. Therefore, such an all-solid battery may be significantly safer than a lithium battery utilizing an electrolyte solution.

A secondary battery utilizes a sulfur-based material as a cathode active material for increased capacity. When utilizing a sulfur-based material, the secondary battery has a higher theoretical energy capacity relative to a lithium-ion battery, and due to a low cost of sulfur-based materials, the manufacturing cost of the secondary battery may be reduced.

During the charging/discharging processes of a secondary battery utilizing a sulfur-based material, polysulfides are generated from the sulfur-based materials, and the generated polysulfides migrate to the anode and react with the anode. Due to such side reactions, lifespan characteristics and capacity characteristics of the secondary battery may deteriorate.

**SUMMARY**

One or more aspects of embodiments of the present disclosure are directed toward a composite cathode active material having improved capacity by inhibiting side reactions caused by polysulfides, and a method of preparing the composite cathode active material.

One or more aspects of embodiments of the present disclosure are directed toward a cathode including the composite cathode active material.

One or more aspects of embodiments of the present disclosure are directed toward an all-solid secondary battery which has improved lifespan characteristics by including the cathode.

Additional aspects will be set forth in part in the description which follows and, in part, will be apparent from the description, or may be learned by practice of the presented embodiments of the disclosure.

According to one or more embodiments of the present disclosure, a composite cathode active material includes:

a core including a lithium-containing sulfide-based cathode active material; and
a shell conforming to a surface of the core,
wherein the shell may include a first metal oxide (e.g., at least one first metal oxide) represented by formula $M_aO_b$ (0<a≤3 and 0<b<4, wherein if (e.g., when) a is 1, 2, or 3, b is not an integer); and a carbonaceous material (e.g., a first carbonaceous material),
the first metal oxide may be in (e.g., disposed within) a matrix of the carbonaceous material, and M may be at least one metal selected from among Groups 2 to 16 in the Periodic Table of Elements.

According to one or more embodiments of the present disclosure, an all-solid battery includes: a cathode layer; an anode layer; and a solid electrolyte layer between the cathode layer and the anode layer, wherein the cathode layer may include the cathode.

According to one or more embodiments of the present disclosure, a method of preparing a composite cathode active material includes: applying a lithium-containing sulfide-based compound; applying a composite; and applying a first carbonaceous material,

wherein the lithium-containing sulfide-based compound, the composite, and the first carbonaceous material are mechanically milled to prepare the composite cathode active material,

the composite may include a first metal oxide (e.g., at least one first metal oxide) represented by formula $M_aO_b$ ($0<a\leq3$ and $0<b<4$, wherein if (e.g., when) a is 1, 2, or 3, b is not an integer); and the first carbonaceous material, wherein the first metal oxide may be in (e.g., disposed in) a matrix of the first carbonaceous material, and M may be at least one metal selected from among Groups 2 to 13, Group 15, and Group 16 in the Periodic Table of Elements.

## BRIEF DESCRIPTION OF THE DRAWINGS

The accompanying drawing is included to provide a further understanding of the present disclosure, and is incorporated in and constitutes a part of this specification. The drawing illustrates example embodiments of the present disclosure and, together with the description, serve to explain principles of present disclosure. The above and other aspects, features, and advantages of certain embodiments of the disclosure will be more apparent from the following description taken in conjunction with the accompanying drawings, in which:

FIG. 1 schematically shows a structure of a composite cathode active material according to one or more embodiments of the present disclosure;
FIG. 2 is a cross-sectional view of an all-solid secondary battery according to one or more embodiments of the present disclosure;
FIG. 3 is a cross-sectional view of an all-solid secondary battery according to one or more embodiments of the present disclosure;
FIG. 4 shows results of a scanning electron microscope image analysis of the composite cathode active material of Example 1 according to one or more embodiments of the present disclosure; and
FIG. 5 shows results of a scanning electron microscope analysis of the composite cathode active material of Comparative Example 1 according to one or more embodiments of the present disclosure.

## DETAILED DESCRIPTION

Reference will now be made in more detail to embodiments, examples of which are illustrated in the accompanying drawings, wherein like reference numerals refer to like elements throughout the present disclosure, and duplicative descriptions thereof may not be provided for conciseness. In this regard, the embodiments of the present disclosure may have different forms and should not be construed as being limited to the descriptions set forth herein. Accordingly, the embodiments of the present disclosure are merely described, by referring to the drawings, to explain aspects of the present disclosure. As utilized herein, the term "and/or" or "or" may include any and all combinations of one or more of the associated listed items. Expressions such as "at least one of," "one of," and "selected from," if (e.g., when) preceding a list of elements, modify the entire list of elements and do not modify the individual elements of the list. For example, "at least one of a, b, or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation.

The present disclosure now will be described more fully hereinafter with reference to the accompanying drawings, in which example embodiments are shown. The present disclosure may, however, be embodied in many different forms and should not be construed as limited to the example embodiments set forth herein. Rather, these example embodiments are provided so that the disclosure will be thorough and complete, and will fully convey the scope of the present disclosure to those skilled in the art. In the drawings, like numbers refer to like elements throughout, and duplicative descriptions thereof may not be provided for conciseness.

It will also be understood that when an element is referred to as being "on" or "over" another element, it may be directly on the other element or intervening elements may also be present. In contrast, when an element is referred to as being "directly on" or "directly over" another element, there are no intervening elements present therebetween.

It will be understood that, although the terms "first," "second," "third," etc. may be utilized herein to describe one or more suitable elements, components, regions, layers, and/or sections, these elements, components, regions, layers, and/or sections should not be limited by these terms. These terms are only utilized to distinguish one element, component, region, layer, or section, from another element, component, region, layer, or section. For example, a first element, component, region, layer, or section could be termed a second element, component, region, layer, or section, without departing from the teachings of the disclosure.

The terminology utilized herein is for the purpose of describing particular embodiments only and is not intended to be limiting of the present disclosure. As utilized herein, the singular forms "a", "an" and "the" are intended to include the plural forms as well including "at least one", unless the context clearly indicates otherwise. The term "at least one" should not be interpreted as being limited to a singular form. It will be further understood that the terms "comprise(s)/include(s) " and/or "comprising/including," or "have/has" and/or "having" when utilized in the present disclosure, specify the presence of stated features, regions, integers, steps, operations, elements, and/or components, but do not preclude the presence or addition of one or more other features, regions, integers, steps, operations, elements, components, and/or groups thereof. Further, the utilization of "may" when describing embodiments of the present disclosure may refer to "one or more embodiments of the present disclosure".

Unless otherwise defined, all terms (including technical and scientific terms) utilized herein have the same meaning as commonly understood by one of ordinary skill in the art to which the present disclosure belongs. It will be further understood that terms, such as those defined in commonly utilized dictionaries, should be interpreted as having a meaning that is consistent with their meaning in the context of the present disclosure and the relevant art and should not be interpreted in an idealized sense or overly formal sense unless expressly so defined herein.

The term "Group" refers to a group in the Periodic Table of Elements of the Elements according to the 1-18 Group numbering system by the International Union of Pure and Applied Chemistry ("IUPAC").

The term "particle diameter" of particles as utilized herein refers to an average particle diameter if (e.g., when) the particles are substantially spherical, or refers to an average major axis length if (e.g., when) the particle is non-spherical. The particle diameter may be measured utilizing a particle size analyzer (PSA). The term "particle diameter" may refer to an average particle diameter, for example. The term "average particle diameter" may refer to, for example, a median particle diameter (D50).

D50 may refer to a particle size corresponding to a cumulative volume of 50% as calculated from the smallest particle size to the largest particle size in a particle size distribution measured by a laser diffraction method.

D90 may refer to a particle size corresponding to a cumulative volume of 90% as calculated from the smallest particle size to the largest particle size in a particle size distribution measured by a laser diffraction method.

D10 may refer to a particle size corresponding to a cumulative volume of 10% as calculated from the smallest particle size to the largest particle size in a particle size distribution measured by a laser diffraction method.

As utilized herein, the term "metal" refers to metals and/or metalloids such as silicon and germanium, in an elemental or ionic state.

As utilized herein, the term "alloy" refers to a mixture of two or more metals.

While examples are described herein, alternatives, modifications, variations, improvements, and substantial equivalents of the examples disclosed herein, including those that are not presently unforeseen or unappreciated, may arise from applicants or those skilled in the art. Accordingly, the appended claims as filed and as they can be amended are intended to embrace all such alternatives, modifications, variations, improvements, and substantial equivalents.

Hereinbelow, a composite cathode active material according to one or more embodiments of the present disclosure, and a cathode and an all-solid secondary battery including the composite cathode active material, will be described in greater detail.

In one or more embodiments, the composite cathode active material may include a core including a lithium-containing sulfide-based cathode active material; and a shell conforming to a surface of the core, wherein the shell may include a first metal oxide (e.g., at least one first metal oxide) represented by formula $M_aO_b$ (0<a≤3 and 0<b<4, wherein if (e.g., when) a is 1, 2, or 3, b is not an integer); and a carbonaceous material (e.g., a first carbonaceous material), the first metal oxide may be in (e.g., disposed within) a matrix of the carbonaceous material, and M may be at least one metal selected from among Groups 2 to 16 in the Periodic Table of Elements.

In one or more embodiments, the composite cathode active material may further include a solid electrolyte. If (e.g., when) the solid electrolyte is included, an amount of the lithium-containing sulfide-based cathode active material may be about 2 parts by weight to about 99 parts by weight, about 10 parts by weight to about 95 parts by weight, about 20 parts by weight to about 93 parts by weight, or about 30 parts by weight to about 90 parts by weight, an amount of the solid electrolyte may be 49 parts by weight or less, for example, about 1 part by weight to about 49 parts by weight, about 3 parts by weight to about 49 parts by weight, or about 5 parts by weight to about 35 parts by weight, and an amount of the (first) carbonaceous material may be about 1 part by weight to about 49 parts by weight or about 5 parts by weight to about 35 parts by weight.

According to one or more embodiments, the amount of the lithium-containing sulfide-based cathode active material may be about 30 parts by weight to about 60 parts by weight, the amount of the solid electrolyte may be 35 parts by weight or less, for example about 1 part by weight to about 35 parts by weight, and the amount of the (first) carbonaceous material may be about 10 parts by weight to about 40 parts by weight.

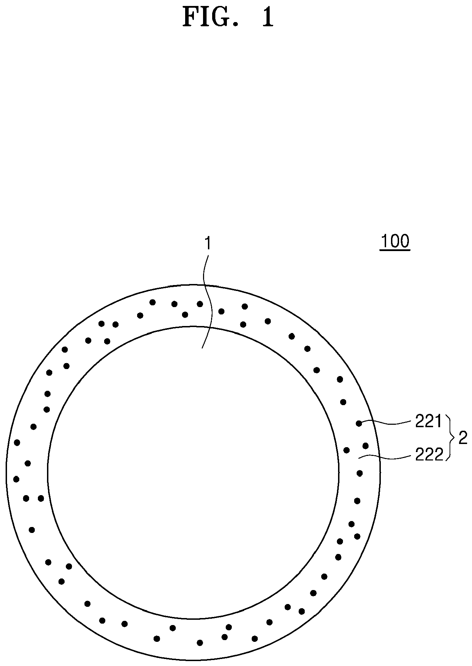

Referring to FIG. 1, in one or more embodiments, a composite cathode active material 100 may include a core 1 and a shell 2 disposed continuously or discontinuously along a surface of the core 1. The shell may completely or partially cover the core 1. The core 1 may include a lithium-containing sulfide-based cathode active material, and the shell 2 may include a first metal oxide 221 and a first carbonaceous material 222. The lithium-containing sulfide-based cathode active material, although it is an insulating material with little electronic conductivity, may form an effective conductive network by including the shell. As a result, by including a cathode including such a composite cathode active material, an all-solid secondary battery having improved lifespan characteristics and high-rate characteristics, mitigated volume expansions at electrode terminals, increased mixture density and high energy density characteristics, may be prepared.

Hereinafter, the following description is made for the purpose of providing a theoretical basis that supports an excellent or suitable effect of a composite cathode active material according to one or more embodiments of the present disclosure; however, it should be understood that the description is provided to further the understanding of the present disclosure disclosed herein and should not be construed as limiting the present disclosure in any way.

The composite cathode active material may include a matrix of a first carbonaceous material, and by utilizing a composite including a plurality of first metal oxides (e.g., plurality of first metal oxide particles) disposed in the matrix, a substantially uniform shell may be disposed on the core while preventing or reducing agglomeration of the first carbonaceous material. Accordingly, by effectively preventing or reducing the contact between the core(s) and an electrolyte, side reactions due to the contact between the core(s) and the electrolyte may be effectively prevented or reduced. In one or more embodiments, the first carbonaceous material may be, for example, a crystalline carbonaceous material. In some embodiments, the first carbonaceous material may be, for example, a carbonaceous nanostructure. In some embodiments, the first carbonaceous material may be, for example, a carbonaceous two-dimensional nanostructure. In some embodiments, the first carbonaceous material may be, for example, a carbonaceous flake. For example, in one or more embodiments, the first carbonaceous material may be graphene.

The shell including graphene and/or its matrix has flexibility and thus may easily accommodate volume changes of the core during charging and discharging. Because crack formation on the surface and/or inside of the composite cathode active material during cycling is inhibited, the formation of a solid electrolyte interface (SEI) on the surface and/or inside of the composite cathode active material may be inhibited. As a result, degradation of a lithium battery including the composite cathode active material may be inhibited. Meanwhile, in a lithium-containing sulfide-based compound in the related art, lithium polysulfides generated by a reaction between lithium ions and sulfur are dissolved in an electrolyte solution, resulting in deterioration in battery capacity and lifespan characteristics.

Because lithium sulfide ($Li_2S$) is an insulator with little electrical conductivity, to be able to utilize it in a cathode active material, the issue of low electrical conductivity needs to be addressed through a composite formation process with a carbon material with high electrical conductivity. In some comparative embodiments, because in an all-solid lithium sulfur battery, the solid electrolyte layer, the cathode, and the anode mixture layer do not substantially contain a solvent, due to low electronic conductivity and low lithium ion conductivity, it may be difficult to secure sufficient capacity during charge/discharge. Therefore, it is important to form an interface to encourage active electrochemical reactions between the cathode active material and the solid electrolyte.

In the present disclosure, a composite cathode active material is provided to address an issue due to low electronic conductivity of a lithium-containing sulfide-based compound.

The composite cathode active material of one or more embodiments may include a matrix of a first carbonaceous material, and in a composite including a plurality of first metal oxides (e.g., plurality of first metal oxide particles) disposed within the matrix, if (e.g., when) the first metal oxide is $Al_2O_3$, $Al_2O_3$ reacts with Li of $Li_2S$ to form lithium ion-conductive compounds, such as $LiAlO_2$ and/or $LiAlO_4$, thus imparting lithium-ion conductivity to the composite cathode active material and reducing an interfacial resistance between the composite cathode active material and the sulfide-based solid electrolyte at the cathode, and as a result, cycle characteristics of the all-solid secondary battery may improve. In one or more embodiments, $Al_2O_3$ may adsorb to lithium polysulfides and inhibits side reactions, thus improving cycle characteristics of the all-solid secondary battery. As such, $Al_2O_3$ has an effect of inhibiting the dissolution of lithium sulfides generated during battery operation. The matrix of the first carbonaceous material (e.g., graphene matrix) also imparts electron conductivity to the composite cathode active material and buffers volume changes of the core, and thus may improve cycle characteristics of the all-solid secondary battery.

Because the carbonaceous material included in the shell of the composite cathode active material is derived from graphene matrix, the carbonaceous material has a relatively low density and high porosity relative to carbonaceous material derived from graphite materials. In one or more embodiments, the interplanar distance d002 of the carbonaceous material included in the shell of the composite cathode active material may be, for example, 3.38 Å or more, 3.40 Å or more, 3.45 Å or more, 3.50 Å or more, 3.60 Å or more, 3.80 Å or more, or 4.00 Å or more. In some embodiments, the interplanar distance d002 of the carbonaceous material included in the shell of the composite cathode active material may be, for example, about 3.38 Å to about 4.0 Å, about 3.38 Å to about 3.8 Å, about 3.38 Å to about 3.6 Å, about 3.38 Å to about 3.5 Å, or about 3.38 Å to about 3.45 Å. Meanwhile, the interplanar distance d002 of carbonaceous materials derived from graphite materials may be, for example, 3.38 Å or less, or from about 3.35 Å to about 3.38 Å.

The first metal oxide, due to having withstanding voltage properties, may prevent or reduce degradation of lithium transition metal oxides included in the core during charging/discharging at a high voltage. For example, in one or more embodiments, the shell may include a single type or kind of first metal oxide, or two or more different types (kinds) of first metal oxide.

As a result, an increase in internal resistance of the lithium battery including the composite cathode active material may be suppressed or reduced, and high-temperature and high-voltage cycle characteristics may be improved.

In one or more embodiments, in the composite cathode active material, an amount of the composite including the first metal oxide and the carbonaceous material may be 40 wt% or less, about 10 wt% to about 40 wt%, about 20 wt% to about 40 wt%, or about 25 wt% to about 40 wt%, based on 100 wt% of the total weight of the composite cathode active material. When the amount of the composite is within the above ranges, lifespan characteristics and capacity characteristics of the all-solid secondary battery may be further improved.

In one or more embodiments, the shell further may further include a solid electrolyte, and the solid electrolyte may be a sulfide-based solid electrolyte, an oxide-based solid electrolyte, a polymer solid electrolyte, or a combination thereof.

The shell may have a thickness of about 10 nm to about 2 $\mu$m, the shell may have a single-layer structure or a multi-layer structure, the shell may be a dry-coated layer, and the amount of the shell may be 40 wt% or less with respect to the total weight of the composite cathode active material.

In one or more embodiments, in the composite cathode active material, an amount of the shell may be, for example, 40 wt% or less, about 10 wt% to about 40 wt%, about 20 wt% to about 40 wt%, or about 25 wt% to about 40 wt%, with respect to the total weight of the composite cathode active material. In some embodiments, an amount of the first metal oxide may be, for example, 25 wt% or less, 24 wt% or less, about 6 wt% to about 24 wt%, about 12 wt% to about 24 wt%, or about 15 wt% to about 24 wt% with respect to the total weight of the composite cathode active material. As the composite cathode active material includes the shell and the first metal oxide in an amount in the above ranges, respectively, cycle characteristics of the all-solid secondary battery may be further improved.

In one or more embodiments, an amount of the first metal (e.g., the metal included the first metal oxide) included in the shell may be, for example, greater than 0 at% to about 10 at%, about 0.1 at% to 9.5 at%, about 1 at% to about 9 at%, about 2 at% to 9 at%, about 3 at% to about 9 at%, about 3 at% to about 8 at%, or about 4 at% to about 8 at%, with respect to the total number of atoms in the shell. As the shell includes the first metal in an amount in the above ranges, cycle characteristics of an all-solid secondary battery including the composite cathode active material may be further improved. The amount of a first metal element included in the shell may be obtained, for example, from a peak obtained by measuring an XPS spectrum of a surface of the composite cathode active material.

In one or more embodiments, an amount of carbon included in the shell may be, for example, about 80 at% to about 99 at%, about 80 at% to about 95 at%, about 80 at% to about 93 at%, about 80 at% to about 91 at%, or about 83 at% to about 90 at%, with respect to the total number of atoms in the shell. As the shell includes carbon in an amount in the above ranges, cycle characteristics of an all-solid secondary battery including the composite cathode active material may be further improved. The amount of carbon included in the shell may be obtained, for example, from a peak obtained by measuring an XPS spectrum of a surface of the composite cathode active material.

The first metal oxide may include at least one metal selected from among aluminum (Al), niobium (Nb), magnesium (Mg), scandium (Sc), titanium (Ti), zirconium (Zr), vanadium (V), tungsten (W), manganese (Mn), iron (Fe), cobalt (Co), palladium (Pd), copper (Cu), silver (Ag), zinc (Zn), antimony (Sb), and selenium (Se). The first metal oxide may be, for example, at least one selected from among $Al_2O_z$ (0<z<3), $NbO_x$ (0<x<2.5), $MgO_x$ (0<x<1), $Sc_2O_z$ (0<z<3), $TiO_y$ (0<y<2), $ZrO_y$ (0<y<2), $V_2O_z$ (0<z<3), $WO_y$ (0<y<2), $MnO_y$ (0<y<2), $Fe_2O_z$ (0<z<3), $Co_3O_w$ (0<w<4), $PdO_x$ (0<x<1), $CuO_x$ (0<x<1), $AgO_x$ (0<x<1), $ZnO_x$ (0<x<1), $Sb_2O_z$ (0<z<3), and $SeO_y$ (0<y<2). As such a first metal oxide is disposed inside the matrix of a carbonaceous material, uniformity of the shell disposed on the cores may improve, and withstand voltage properties of the composite cathode active material may further improve. For example, in some embodiments, the shell may include $Al_2O_x$ (0<x<3) as the first metal oxide.

In one or more embodiments, the shell may further include one or more types (kinds) of second metal oxides, represented by $M_aO_c$ (0<a≤3 and 0<c≤4, in the case (e.g., embodiments) where a is 1, 2, or 3, c is an integer). M may be at least one metal selected from among Groups 2 to 13, Group 15, and Group 16 of the Periodic Table of Elements. For example, in one or more embodiments, the second metal oxide may include the same metal as the first metal oxide, and a ratio of c to a in the second metal oxide, c/a, may have a greater value than a ratio of b to a in the first metal oxide, b/a. For example, c/a > b/a may be satisfied. The second metal oxide may be selected, for example, from among $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, and $SeO_2$. The first metal oxide may be a reduction product of the second metal oxide. The first metal oxide may be obtained from a partial or complete reduction of the second metal oxide. Accordingly, the first metal oxide may have a lower oxygen content (e.g., amount) and a lower oxidation number of the metal compared to the second metal oxide. For example, in some embodiments, the shell may include the first metal oxide, $Al_2O_x$ (0<x<3) and the second metal oxide, $Al_2O_3$.

In one or more embodiments, in the composite cathode active material, for example, the carbonaceous material included in the shell and a transition metal of a lithium transition metal oxide included in the core may be chemically bound via a chemical bond. The carbon atom (C) of the carbonaceous material included in the shell, and the transition metal (Me) of the lithium transition metal oxide may be chemically bound, for example, through a C-O-Me bond via an oxygen atom (for example, C-O-Ni bond, or C-O-Co bond). As the carbonaceous material included in the shell and the lithium transition metal oxide included in the core are chemically bound via a chemical bond, the core and the shell form a composite. Accordingly, the resulting composite may be distinguished from a mixture of the carbonaceous material and the lithium transition metal oxide obtained by simple physical mixing.

In one or more embodiments, the carbonaceous material and the first metal oxide included in the shell may also be chemically bound via a chemical bond. Here, the chemical bond may be, for example, a covalent bond or an ionic bond. The covalent bond may be a bond that includes, for example, at least one selected from among an ester group, an ether group, a carbonyl group, an amide group, and an acid anhydride group. The ionic bond may be a bond that includes, for example, a carboxylic acid ion, an ammonium ion, an acyl cation group, and/or the like.

In one or more embodiments, the thickness of the shell may be, for example, about 1 nm to about 5 $\mu$m, about 1 nm to about 1 $\mu$m, about 1 nm to about 500 nm, about 1 nm to about 200 nm, about 1 nm to about 100 nm, about 1 nm to about 90 nm, about 1 nm to about 80 nm, about 1 nm to about 70 nm, about 1 nm to about 60 nm, about 1 nm to about 50 nm, about 1 nm to about 40 nm, about 1 nm to about 30 nm, or about 1 nm to about 20 nm. When the shell has a thickness within the above ranges, an increase in internal resistance of the lithium battery including the composite cathode active material may be suppressed or reduced.

In one or more embodiments, the composite cathode active material may further include, for example, a third metal doped on the core, or a third metal oxide coated on the core. In some embodiments, the shell may be disposed on the third metal doped on the core, or on the third metal oxide coated on the core. For example, after the third metal is doped on a surface of the lithium transition metal oxide included in the core, or the third metal oxide is coated on a surface of the lithium transition metal oxide included in the core, the shell may be disposed on the third metal and/or the third metal oxide. For example, in one or more embodiments, a composite cathode active material may include a core; an interlayer on the core; and a shell on the interlayer, and the interlayer may include a third metal or a third metal oxide. The third metal may be one or more metals selected from among Al, Zr, W, and Co, and the third metal oxide may be $Al_2O_3$, $Li_2O-ZrO_2$, $WO_2$, CoO, $Co_2O_3$, $Co_3O_4$, and/or the like.

In one or more embodiments, the shell included in the composite cathode active material may include, for example, at least one selected from among a composite including a first metal oxide and a carbonaceous material such as graphene, and milling products of the composite, wherein the first metal oxide may be disposed in a matrix of the carbonaceous material, for example, in a graphene matrix. For example, in some embodiments, the shell may be prepared from a composite including a first metal oxide and a carbonaceous material such as graphene. In some embodiments, the composite may further include a second metal oxide in addition to the first metal oxide. For example, in some embodiments, the composite may include two or more types (kinds) of first metal oxides. For example, in some embodiments, the composite may include two or more types (kinds) of first metal oxides and two or more types (kinds) of second metal oxides.

In one or more embodiments, an amount of the at least one selected from among the composite and milling products of the composite included in the composite cathode active material may be 40 wt% or less, about 10 wt% to about 40 wt%, about 20 wt% to about 40 wt%, or about 25 wt% to about 40 wt%, with respect to the total weight of the composite cathode active material. As the composite cathode active material includes at least one selected from among the composite and milling products of the composite in an amount in the above ranges, the cycle characteristics of the all-solid state secondary battery including the composite cathode active material may be further improved.

In one or more embodiments, at least one selected from among the first metal oxide and the second metal oxide included in the composite may have an average particle diameter of about 1 nm to about 1 $\mu$m, about 1 nm to about 500 nm, about 1 nm to about 200 nm, about 1 nm to about 100 nm, about 1 nm to about 70 nm, about 1 nm to about 50 nm, about 1 nm to about 30 nm, about 3 nm to about 30 nm, about 3 nm to about 25 nm, about 5 nm to about 25 nm, about 5 nm to about 20 nm, or about 7 nm to about 20 nm. As the first metal oxide and/or the second metal oxide have a particle diameter in the above nano-size ranges, the first metal oxide and/or the second metal oxide may be more uniformly distributed in the matrix of the carbonaceous material of the composite. Therefore, the composite may be uniformly coated on the core without aggregation to form a shell. In one or more embodiments, the first metal oxide and/or the second metal oxide due to having a particle diameter in the above ranges may be more uniformly disposed on the core. Accordingly, substantially uniform disposition of the first metal oxide and/or the second metal oxide on the core may more effectively achieve withstanding voltage characteristics.

Average particle diameters of the first metal oxide and the second metal oxide may be measured utilizing, for example, a laser diffraction method or a dynamic light scattering-type or kind measurement device. In one or more embodiments, the average particle diameter may be measured utilizing, for example, a laser scattering particle size distribution system (e.g., LA-920 Horiba), and the average particle diameter may be a value of median particle diameter (D50) at a cumulative volume of 50 % from the smallest particle to the largest particle based on volume in a cumulative particle distribution.

In one or more embodiments, at least one selected from among the first metal oxide and the second metal oxide included in the composite may have a uniformity deviation of 3% or less, 2% or less, or 1% or less. Uniformity may be measured, for example, by XPS. Accordingly, in one or more embodiments, in the composite, at least one selected from among the first metal oxide and the second metal oxide may be uniformly distributed with a deviation of 3% or less, 2% or less, or 1% or less.

For example, in some embodiments, the carbonaceous material included in the composite may have a branched structure, and at least one metal oxide selected from among the first metal oxide and the second metal oxide may be distributed in the branched structure of the carbonaceous material. The branched structure of the carbonaceous material may include, for example, a plurality of carbonaceous material particles in contact with one another. As the carbonaceous material has such a branched structure, one or more suitable conduction paths may be provided.

In one or more embodiments, the carbonaceous material included in the composite may be, for example, graphene. For example, the graphene included in the composite may have a branched structure, and at least one metal oxide selected from among the first metal oxide and the second metal oxide may be distributed in the branched structure of graphene. The branched structure of graphene may include, for example, a plurality of graphene particles in contact with one another. As the graphene has a branched structure, one or more suitable conductive paths may be provided.

In one or more embodiments, the carbonaceous material included in the composite may have, for example, a spherical structure (e.g., a substantially spherical structure), and at least one metal oxide selected from among the first metal oxide and the second metal oxide may be distributed in the spherical structure. The spherical structure of the carbonaceous material may have a size of about 50 nm to about 300 nm. There may be multiple carbonaceous materials having a spherical structure. Due to the spherical structure of the carbonaceous material, the composite may have a secure structure (e.g., a robust structure).

In some embodiments, the carbonaceous material included in the composite may be, for example, graphene. The graphene may have, for example, a spherical structure (e.g., substantially spherical structure), and at least one metal oxide selected from among the first metal oxide and the second metal oxide may be distributed in the spherical structure. The spherical structure of the graphene may have a size of about 50 nm to about 300 nm. There may be multiple types (kinds) of graphene having a spherical structure. Due to the spherical structure of the graphene, the composite may have a secure structure.

In one or more embodiments, the carbonaceous material included in the composite may have, for example, a spiral structure in which a plurality of spherical structures (e.g., substantially spherical structures) are connected, and at least one metal oxide selected from among the first metal oxide and the second metal oxide may be distributed in the spherical structures of the spiral structure. The spiral structure of the carbonaceous material may have a size of about 500 nm to about 100 μm. Due to the spiral structure of the carbonaceous material, the composite may have a secure structure.

In some embodiments, the carbonaceous material included in the composite may be, for example, graphene. The graphene may have, for example, a spiral structure in which a plurality of spherical structures (e.g., substantially spherical structures) are connected, and at least one metal oxide selected from among the first metal oxide and the second metal oxide may be distributed in the spherical structures of the spiral structure. The spiral structure of the graphene may have a size of about 500 nm to about 100 μm. Due to the spiral structure of the graphene, the composite may have a secure structure.

In one or more embodiments, the carbonaceous material included in the composite may have, for example, a cluster structure, and the cluster structure is aggregates of a plurality of spherical structures (e.g., substantially spherical structures). At least one metal oxide selected from among the first metal oxide and the second metal oxide may be distributed in the spherical structures of the cluster structure. The cluster structure of the carbonaceous material may have a size of about 0.5 mm to about 10 mm. Due to the cluster structure of the carbonaceous material, the composite may have a secure structure.

In some embodiments, the carbonaceous material included in the composite may be, for example, graphene. The graphene may have, for example, a cluster structure in which a plurality of spherical structures (e.g., substantially spherical structures) are agglomerated, and at least one metal oxide selected from among the first metal oxide and the second metal oxide may be distributed in the spherical structures of the cluster structure. The cluster structure of the graphene may have a size of about 0.5 mm to about 10 mm. Due to the cluster structure of the graphene, the composite may have a secure structure.

In one or more embodiments, the composite may have, for example, a faceted-ball structure, and at least one selected from among the first metal oxide and the second metal oxide may be distributed within the faceted-ball structure and/or on a surface of the faceted-ball structure. Due to the faceted-ball structure of the composite, the composite may be more easily coated on irregular surface bumps on the core.

In one or more embodiments, the composite may have, for example, a planar structure, and at least one selected from among the first metal oxide and the second metal oxide may be distributed within the planar structure or on a surface of the planar structure. Due to such a 2-dimensional planar structure of the composite, the composite may be more easily coated on irregular surface structures (e.g., bumps) on the core.

In one or more embodiments, the carbonaceous material included in the composite may include at least 1 to 20 carbonaceous material layers, extending from the first metal oxide by a distance of 10 nm or less. For example, in some embodiments, due to a plurality of carbonaceous material layers being deposited, the first metal oxide may have disposed thereon a carbonaceous material having a total thickness of 12 nm or less. For example, in some embodiments, the total thickness of the carbonaceous material may be about 0.6 nm to about 12 nm.

In one or more embodiments, the carbonaceous material included in the composite may be, for example, graphene. The graphene may include at least 1 to 20 graphene layers, extending from the first metal oxide by a distance of 10 nm or less. For example, in some embodiments, due to a plurality of graphene layers being deposited, the first metal oxide may have disposed thereon graphene having a total thickness of 12 nm or less. For example, in some embodiments, the total thickness of the graphene may be about 0.6 nm to about 12 nm.

A cathode according to one or more embodiments may include the composite cathode active material. As the cathode includes the composite cathode active material, improvement in cycle characteristics and reduction of internal resistance may be achieved.

The cathode may be prepared by a method described herein as an example. However, the method by which to prepare the cathode is not necessarily limited to this method and may be adjusted according to conditions required.

First, a cathode active material composition may be prepared by combining the composite cathode active material of the present disclosure, a conductive material, a binder, and a solvent. The prepared cathode active material composition may be directly coated and/or dried on an aluminum current collector to produce a cathode plate having a cathode active material layer formed thereon. In some embodiments, the cathode active material composition may be cast on a separate support, and a film exfoliated from the support may be laminated on the aluminum current collector to thereby form a cathode plate with a cathode active material layer formed thereon.

Examples of the conductive material may include: carbon black, graphite powder, natural graphite, artificial graphite, acetylene black, Ketjen black, and carbon fibers; carbon nanotubes; metal powder, metal fibers, and/or metal tubes, such as copper, nickel, aluminum, silver, etc.; and conductive polymers such as polyphenylene derivatives, and/or the like. However, the conductive material is not limited to the aforementioned examples and may be any conductive material available in the art.

Examples of the binder may include a vinylidene fluoride/hexafluoropropylene copolymer, polyvinylidene fluoride, polyacrylonitrile, polymethylmethacrylate, polytetrafluoroethylene (PTFE), a mixture of the aforementioned polymers, a styrene butadiene rubber-based polymer, and/or the like. Examples of the solvent may include N-methylpyrrolidone (NMP), acetone, water, and/or the like. However, the binder or the solvent are not necessarily limited to the aforementioned examples but may be any binder or solvent available in the art.

In one or more embodiments, it may also form pores inside an electrode plate by further adding a plasticizer and/or a pore-forming agent to the cathode active material composition.

The amount of each of the cathode active material, the conductive material, the binder, and the solvent utilized in the cathode may be at a level commonly utilized in lithium batteries. Depending on the intended purpose of utilization and configuration of a lithium battery, in some embodiments, one or more of the conductive material, binder, and solvent may not be provided.

In one or more embodiments, an amount of the binder included in the cathode may be, for example, about 0.1 wt% to about 10 wt%, or about 0.1 wt% to about 5 wt% with respect to the total weight of the cathode active material layer. an amount of the composite cathode active material included in the cathode may be about 20 wt% to about 60 wt% of the total weight of the cathode active material layer.

In addition to the composite cathode active material, in one or more embodiments, the cathode may further include other common cathode active materials.

Such other common cathode active materials may include a lithium-containing metal oxide, and any lithium-containing metal oxide commonly available in the art may be utilized without limitations. For example, the cathode active material may utilize at least one composite oxide of lithium with a metal selected from among cobalt, manganese, nickel, and a combination thereof, and, for example, may utilize a compound represented by any one selected from among the following formulas: $Li_aA_{1-b}B'_bD_2$ (in the formula, $0.90 \leq a \leq 1$ and $0 \leq b \leq 0.5$); $Li_aE_{1-b}B'_bO_{2-c}D_c$ (in the formula, $0.90 \leq a \leq 1$, $0 \leq b \leq 0.5$, and $0 \leq c \leq 0.05$); $LiE_{2-b}B'_bO_{4-c}D_c$ (in the formula, $0 \leq b \leq 0.5$ and $0 \leq c \leq 0.05$); $Li_aNi_{1-b-c}Co_bB'_cD_\alpha$ (in the formula, $0.90 \leq a \leq 1$, $0 \leq b \leq 0.5$, $0 \leq c \leq 0.05$, and $0 < \alpha \leq 2$); $Li_aNi_{1-b-c}Co_bB'_cO_{2-\alpha}F_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Co_bB'_cO_{2-\alpha}F'_2$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB'_cD_\alpha$ (in the formula, $0.90 \leq a \leq 1$, $0 \leq b \leq 0.5$, $0 \leq c \leq 0.05$, and $0 < \alpha \leq 2$); $Li_aNi1_{i-b-c}Mn_bB'_cO_{2-\alpha}F'_\alpha$ (in the formula, $0.90 \leq a \leq 1$, $0 \leq b \leq 0.5$, $0 \leq c \leq 0.05$, and $0 < \alpha < 2$); $Li_aNi_{1-b-c}Mn_bB'_cO_{2-\alpha}F'_2$ (in the formula, $0.90 \leq a \leq 1$, $0 \leq b \leq 0.5$, $0 \leq c \leq 0.05$, and $0 < \alpha < 2$); $Li_aNi_bE_cG_dO_2$ (in the formula, $0.90 \leq a \leq 1$, $0 \leq b \leq 0.9$, $0 \leq c \leq 0.5$, and $0.001 \leq d \leq 0.1$); $Li_aNi_bCo_cMn_dG_eO_2$ (in the formula, $0.90 \leq a \leq 1$, $0 \leq b \leq 0.9$, $0 \leq c \leq 0.5$, $0 \leq d \leq 0.5$, and $0.001 \leq e \leq 0.1$); $Li_aNiG_bO_2$ (in the formula, $0.90 \leq a \leq 1$ and $0.001 \leq b \leq 0.1$); $Li_aCoG_bO_2$ (in the formula, $0.90 \leq a \leq 1$ and $0.001 \leq b \leq 0.1$); $Li_aMnG_bO_2$ (in the formula, $0.90 \leq a \leq 1$ and $0.001 \leq b \leq 0.1$); $Li_aMn_2G_bO_4$ (in the formula, $0.90 \leq a \leq 1$ and $0.001 \leq b \leq 0.1$); $QO_2$; $QS_2$; $LiQS_2$; $V_2O_5$; $LiV_2O_5$; $LiI'O_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

In the formulas representing the above compound, A may be Ni, Co, Mn, or a combination thereof; B' may be Al, Ni, Co, Mn, Cr, Fe, Mg, Sr, V, a rare-earth element, or a combination thereof; D may be O, F, S, P, or a combination thereof; E may be Co, Mn, or a combination thereof; F' may be F, S, P, or a combination thereof; G may be Al, Cr, Mn, Fe, Mg, La, Ce, Sr, V, or a combination thereof; Q may be Ti, Mo, Mn, or a combination thereof; I' may be Cr, V, Fe, Sc, Y, or a combination thereof; and J may be V, Cr, Mn, Co, Ni, Cu, or a combination thereof.

In some embodiments, a compound having a coating layer added on a surface of the above compound may also be utilized. Furthermore, in some embodiments, a mixture of the above compound with a compound having a coating layer added thereon may also be utilized. The coating layer added on the surface of the above-described compound may include, for example, compounds of a coating element, such as oxides and hydroxides of the coating element, oxyhydroxides of the coating element, oxycarbonates of the coating element, and/or hydroxycarbonates of the coating element. A compound forming the coating layer may be amorphous or crystalline. The coating element included in the coating layer may be Mg, Al, Co, K, Na, Ca, Si, Ti, V, Sn, Ge, Ga, B, As, Zr, or a mixture thereof. A method by which to form a coating layer may be selected from among methods that exert no adverse effect on physical properties of the cathode active material. Non-limiting examples of coating method may include spray coating, dip coating, and/or the like. Because specific types (kinds) of such coating methods are well suitable to those of ordinary skill in the art, detailed descriptions of such methods will not be provided for conciseness.

In one or more embodiments, a lithium battery employs a cathode containing the composite cathode active material of the present disclosure.

In one or more embodiments, an all-solid secondary battery may have improved lifespan characteristics and capacity characteristics by employing a cathode including the composite cathode active material of the present disclosure.

Hereinafter, an all-solid secondary battery according to one or more embodiments will be described in greater detail.

## All-Solid Secondary Battery

An all-solid secondary battery according to one or more embodiments may include a cathode layer; an anode layer; and a solid electrolyte layer between the cathode layer and the anode layer, wherein the cathode layer may include a cathode current collector and a cathode active material layer disposed on one or both (e.g., simultaneously on both opposite) sides of the cathode current collector, the cathode active material layer may include a lithium sulfide-based cathode active material, and the lithium-containing sulfide-based cathode active material may include $Li_2S_b(n{\geq}1)$, a $Li_2S_n$ ($n{\geq}1$) containing composite, or a combination thereof. For example, in some embodiments, $Li_2S_n$ ($n{\geq}1$) may contain $Li_2S$.

The a composite containing $Li_2S_n$ ($n{\geq}1$) comprises a composite of $Li_2S$ and carbon, a composite of $Li_2S$, carbon, and a solid electrolyte, a composite of $Li_2S$ and a solid electrolyte, a composite of $Li_2S$, carbon, and a lithium salt, a composite of $Li_2S$ and a lithium salt, a composite of $Li_2S$ and a metal carbide, a composite of $Li_2S$, carbon, and a metal carbide, a composite of $Li_2S$ and a metal nitride, a composite of $Li_2S$, carbon, and a metal nitride, or a combination thereof.

The anode layer may include an anode current collector and a first anode active material layer disposed on one side of the anode current collector, wherein a ratio (B/A) of initial charge capacity (B) of the first anode active material layer to initial charge capacity (A) of the cathode active material layer may be about 0.005 to about 0.45, the initial charge capacity of the cathode active material layer may be determined by charging from a 1st open circuit voltage to a maximum charging voltage, and the initial charge capacity of the anode active material layer may be determined by discharging from a 2nd open circuit voltage to 0.01 V vs. $Li/Li^+$. The ratio (B/A) of initial charge capacity (B) of the first anode active material layer to initial charge capacity (A) of the cathode active material layer may be about 0.01 to about 0.4, about 0.01 to about 0.3, about 0.01 to about 0.2, or about 0.01 to about 0.1,

In one or more embodiments, the all-solid secondary battery may in clude, as a lithium source, a lithium-containing sulfide-based cathode active material instead of lithium metal. Accordingly, lithium sources such as lithium metal, may not be provided from the anode layer. Because the volume of the anode layer is reduced, the energy density of the all-solid secondary battery may be improved.

In one or more embodiments, the all-solid secondary battery may include, as a cathode active material, a lithium-containing sulfide-based cathode active material. Accordingly, blocking of ion and/or electron transport paths due to a volume expansion of a lithium-free sulfide-based cathode active material, e.g., sulfur (S) during initial discharging may be prevented or reduced. By preventing or reducing such blocking of ion and/or electron transport paths, cycle characteristics of the all-solid secondary battery may be improved. In one or more embodiments, the all-solid secondary battery does not show an issue related to lithium polysulfide being dissolved in an electrolyte and contains no flammable organic solvent, and therefore is able to ensure safety.

In one or more embodiments, the all-solid secondary battery may include a first anode active material layer which has an initial charge capacity in a range of about 0.005 to about 0.45 relative to an initial charge capacity of the cathode active material layer. As the first anode active material layer has such a small initial charge capacity within the above range, the anode layer may effectively accommodate a volume change of the cathode layer during charging and discharging. As a result, the overall volume change of the all-solid secondary battery may be suppressed or reduced during charging and discharging. Because degradations, such as crack formation due to a rapid volume change during charging and discharging of the all-solid secondary battery, are prevented or reduced, the occurrence of a short-circuit in the all-solid secondary battery may be prevented or reduced and cycle characteristics of the all-solid secondary battery may be improved.

Inclusion of the solid electrolyte layer in the all-solid secondary battery may prevent or reduce the migration of polysulfides to the anode layer that occurs during charging and discharging of the lithium-containing sulfide-based cathode active material. As a result, side reactions between polysulfides and an anode active material may be inhibited.

As an inactive member is disposed on one side surface of the cathode layer, crack formation in the solid electrolyte layer that occurs during pressing and/or cycling of an all-solid secondary battery may be suppressed or reduced. Therefore, crack formation in the solid electrolyte layer during the manufacture and/or cycling of an all-solid secondary battery may be inhibited, and as a result, a short circuit in the all-solid secondary battery may be prevented or reduced. As a result, short-circuits in the all-solid secondary battery may be prevented or reduced and lifespan characteristics thereof may be improved.

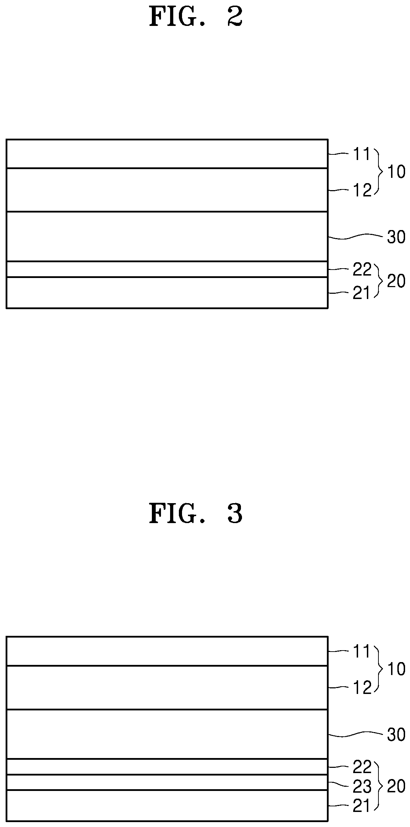

Referring to FIG. 2 and FIG. 3, an all-solid secondary battery may include a cathode layer 10; an anode layer 20; and a solid electrolyte layer 30 between the cathode layer 10 and the anode layer 20, wherein the cathode layer 10 includes a cathode current collector 11 and a cathode active material layer 12 on one or both (e.g., opposite) sides of the cathode current collector 11, and the cathode active material layer 12 includes the composite cathode active material according to one or more embodiments.

In the composite cathode active material according to one or more embodiments, the sulfide-based cathode active material includes $Li_2S$, a $Li_2S$-containing composite, or a combination thereof.

**Cathode Layer**

**Cathode Layer: Cathode Active Material**

Referring to FIG. 2 and FIG. 3, in one or more embodiments, the cathode active material layer 12 may include, for example, a cathode active material and a solid electrolyte. The solid electrolyte included in the cathode active material layer 12 may be similar to or different from a solid electrolyte included in the solid electrolyte layer 30. For details of the solid electrolyte, the description of the solid electrolyte layer 30 may be referred to.

The cathode active material may include a lithium-containing sulfide-based cathode active material. The lithium-containing sulfide-based cathode active material may be, for example, an electrode material in which lithium is added to a sulfur-based cathode active material. In one or more embodiments, the sulfur-based cathode active material may include, for example, a sulfur-based material, a sulfur-based material-containing composite, or a combination thereof. The sulfur-based material may be, for example, inorganic sulfur, $Li_2S_n$ (n>1), a disulfide compound, an organic sulfur compound, a carbon-sulfur polymer, or a combination thereof. The sulfur-based material-containing composite may be, for example, a composite containing inorganic sulfur, $Li_2S_n$ (n>1), a disulfide compound, an organic sulfur compound, a carbon-sulfur polymer, or a combination thereof. In some embodiments, the sulfur-based material-containing composite may include, for example, a composite of a sulfur-based material and carbon, a composite of a sulfur-based material, carbon, and a solid electrolyte, a composite of a sulfur-based material and a solid electrolyte, a composite of a sulfur-based material, carbon, and a lithium salt, a composite of a sulfur-based material and a lithium salt, a composite of a sulfur-based material and a metal carbide, a composite of a sulfur-based material, carbon, and a metal carbide, a composite of a sulfur-based material and a metal nitride, a composite of a sulfur-based material, carbon, and a metal nitride, or a combination thereof. Because a lithium-containing sulfide-based cathode active material provides a higher gravimetric discharge capacity than an oxide-based cathode active material, an all-solid secondary battery including the lithium-containing sulfide-based cathode active material may have an improved gravimetric energy density.

In one or more embodiments, the lithium-containing sulfide-based cathode active material may include, for example, $Li_2S$, a $Li_2S$-containing composite, or a combination thereof. By including a $Li_2S$, a $Li_2S$-containing composite, or a combination thereof as the lithium-containing sulfide-based cathode active material, the utilization of lithium metal may not be required during manufacturing of an all-solid secondary battery. Lithium metal, due to having relatively high reactivity and high ductility, may decrease the mass productivity of battery manufacturing. Accordingly, the mass productivity of an all-solid secondary battery according to one or more embodiments of the present disclosure may be improved. As lithium metal is omitted from an anode layer, the volume of the anode layer may decrease, the volumetric energy density of the all-solid secondary battery may improve, and the all-solid secondary battery may be configured with a simpler structure.

The lithium-containing sulfide-based cathode active material (e.g., $Li_2S$), for example, decreases in volume through delithiation during initial charging, and during subsequent discharging, increases again in volume through lithiation. Therefore, because the lithium-containing sulfide-based cathode active material undergoes a volume change while ion and/or electron transport paths by a conductive material arranged around the lithium-containing sulfide-based cathode active material are maintained, the likelihood of the ion and/or electron transport paths being blocked may be low. In some comparative embodiments, a sulfur-based cathode active material (e.g., S), for example, increases in volume through lithiation during initial discharging, and during the subsequent charging, decreases in volume through delithiation. Therefore, because the initial ion and/or electron transport paths by a conductive material arranged around the sulfur-based cathode active material may collapse due to an initial volume expansion of the sulfur-based cathode active material, the likelihood of the ion and/or electron transport paths being blocked may be high.

The lithium-containing sulfide-based cathode active material (e.g., in the form of particles) may have an average particle diameter (D50) of, for example, about 0.1 nm to about 30 $\mu$m, about 1 nm to about 50 $\mu$m, about 10 nm to about 50 $\mu$m, or about 1 $\mu$m to about 10 $\mu$m. As the lithium-containing sulfide-based cathode active material has an average particle diameter in the above ranges, a further improvement in the cycle characteristics of an all-solid secondary battery including the lithium-containing sulfide-based cathode active material may be achieved. In one or more embodiments, the $Li_2S$-containing composite may be, for example, a composite of $Li_2S$ and a conductive material. For example, the conductive material may be an ionically conductive material, an electronically conductive material, or a combination thereof.

If (e.g., when) a solid electrolyte (e.g., a sulfide-based solid electrolyte) is included in the composite cathode active material, the average particle diameter of the solid electrolyte may be about 0.1 nm to about 10 $\mu$m, about 1 nm to about 8 $\mu$m, about 10 nm to about 5 $\mu$m, or about 1 $\mu$m to about 3 $\mu$m.

A composite, which includes the lithium-containing sulfide-based cathode active material according to one or more embodiments and the first carbonaceous material or includes the lithium-containing sulfide-based cathode active material, the first carbonaceous material, and the solid electrolyte, may have an average particle diameter of about 0.1 $\mu$m to about 50 $\mu$m, or about 1 $\mu$m to about 10 $\mu$m.

The electronically conductive material may have an electronic conductivity of, for example, $1.0 \times 10^3$ S/m or more, $1.0 \times 10^4$ S/m or more, or $1.0 \times 10^5$ S/m or more. The form of the electronically conductive material may be, for example, a particulate electronically conductive material, a plate-like electronically conductive material, a rodlike electronically conductive material, or a combination thereof, but embodiments of the present disclosure are not necessarily limited thereto. For example, in one or more embodiments, the electronically conductive material may be carbon, a metal powder, a metal compound, and/or the like. If (e.g., when) carbon is included as the electronically conductive material, due to high electronic conductivity and light weight of carbon, an all-solid secondary battery with a high energy density per unit mass may be realized. The electronically conductive material may have pores. By having pores therein, the electronically conductive material may accommodate $Li_2S$ in the pores, which lead to an increased contact surface between $Li_2S$ and the electronically conductive material and an increased specific surface area of $Li_2S$. For example, in one or more embodiments, the pores may have a pore volume of about 0.1 cc/g (cubic centimeter/gram) to about 20.0 cc/g, about 0.5 cc/g to about 10 cc/g, or about 0.5 cc/g to about 5 cc/g. For example, in one or more embodiments, the pores may have an average pore diameter of about 1 nm to about 100 nm, about 1 nm to about 50 nm, or about 1 nm to about 20 nm. The electronically conductive material having pores may have a Brunauer-Emmett-Teller (BET) specific surface area of about 200 m$^2$/g to about 4,500 m$^2$/g if (e.g., when) the average pore diameter is 15 nm or less; or a BET specific surface area of about 100 m$^2$/g to 2,500 m$^2$/g if (e.g., when) the average pore diameter is greater than 15 nm. The BET specific surface area, pore diameter, pore volume, and average pore diameter may be obtained utilizing, for example, a nitrogen adsorption method.

For example, the ionically conductive material may have an ionic conductivity of $1.0 \times 10^{-5}$ S/m or more, $1.0 \times 10^{-4}$ S/m or more, or $1.0 \times 10^{-3}$ S/m or more. The ionically conductive material may have pores. By having pores therein, the ionically conductive material may accommodate $Li_2S$ in the pores, which lead to an increased contact surface between $Li_2S$ and the ionically conductive material and an increased specific surface area of $Li_2S$. The form of the ionically conductive material may be, for example, a particulate ionically conductive material, a lamellar ionically conductive material, a rodlike ionically conductive material, or a combination thereof, but embodiments of the present disclosure are not necessarily limited thereto. In one or more embodiments, the ionically conductive material may be, for example, a sulfide-based solid electrolyte, an oxide-based solid electrolyte, and/or the like. If (e.g., when) a sulfide-based solid electrolyte is included as the ionically conductive material, due to high ionic conductivity of the sulfide-based solid electrolyte and its ability to be molded in one or more suitable forms, an all-solid secondary battery having a large capacity may be realized.

Non-limiting examples of the $Li_2S$-containing composite may include a $Li_2S$-carbon composite, a $Li_2S$-carbon-solid electrolyte composite, a $Li_2S$-solid electrolyte composite, a $Li_2S$-carbon-lithium salt composite, , a $Li_2S$-lithium salt composite, a $Li_2S$-metal carbide composite, a $Li_2S$-carbon-metal carbide composite, a $Li_2S$-metal nitride composite, a $Li_2S$-carbon-metal nitride composite, or a combination thereof.

The $Li_2S$-containing composite is distinguished from simple mixtures of $Li_2S$, and carbon, a solid electrolyte, a lithium salt, metal carbide, metal nitride, and the like. In the simple mixtures of $Li_2S$, and carbon, a solid electrolyte, a lithium salt, metal carbide, metal nitride, and the like, a dense interface between $Li_2S$ and such components may not be maintained, and thus high interfacial resistance may be provided, which may reduce the lifespan characteristics of an all-solid secondary battery.

The $Li_2S$-carbon composite may include a carbon in addition to $Li_2S$. The carbon may be, for example, any carbon-containing material available as a conductive material in the art. The carbon may be, for example, crystalline carbon, amorphous carbon, or a combination thereof. The carbon may be, for example, a fired product of a carbon precursor. The carbon may be, for example, a carbon nanostructure. Non-limiting examples of the carbon nanostructure may include a one-dimensional carbon nanostructure, a two-dimensional carbon nanostructure, a three-dimensional carbon nanostructure, or a combination thereof. Non-limiting examples of the carbon nanostructure may include carbon nanotubes, carbon nanofibers, carbon nanotubes, carbon nanorods, graphene, or a combination thereof. The carbon may be, for example, porous carbon or non-porous carbon. The porous carbon may contain, for example, periodic and regular two-dimensional or three-dimensional pores. Non-limiting examples of the porous carbon may include carbon black such as Ketjen black, acetylene black, Denka black, thermal black, and/or channel black; graphite; activated carbon; or a combination thereof. The type or kind of the carbon may be a particulate form, a sheet form, a flake shape, and/or the like, but without being limited to the aforementioned examples, may utilize any material available as carbon in the art. The $Li_2S$-carbon composite may be prepared by methods including, but not limited to, a dry method, a wet method, or a combination thereof. Further, methods available in the art for preparing $Li_2S$-carbon composites may include milling, heat treatment, deposition, and/or the like, but without being limited to the aforementioned methods, any method that is utilized in the art may be utilized.

The $Li_2S$-carbon-solid electrolyte composite may include a carbon and a solid electrolyte in addition to $Li_2S$. The carbon may refer to the description of the $Li_2S$-carbon composite above. The solid electrolyte may be any material available as an ionically conductive material in the art. In one or more embodiments, the solid electrolyte may be, for example, an inorganic solid electrolyte. Non-limiting examples of the solid electrolyte may include a crystalline solid electrolyte, an amorphous solid electrolyte, or a combination thereof. Non-limiting examples of the solid electrolyte may include a sulfide-based solid electrolyte, an oxide-based solid electrolyte, a polymer solid electrolyte, or a combination thereof. The sulfide-based solid electrolyte may contain, for example, Li, S, and P, and may optionally further contain a halogen element. The sulfide-based solid electrolyte may be selected from among sulfide-based solid electrolytes available for utilization in a solid electrolyte layer. The sulfide-based solid electrolyte may have an ionic conductivity of $1 \times 10^{-5}$ S/cm or more at room temperature, for example. The oxide-based solid electrolyte may include, for example, Li, O, and a transition metal element, and may optionally further include other elements. For example, the oxide-based solid electrolyte may be a solid electrolyte having an ionic conductivity of $1 \times 10^{-5}$ S/cm or more at room temperature. The oxide-based solid electrolyte may be selected from among oxide-based solid electrolytes available for utilization in a solid electrolyte layer.

The $Li_2S$-solid electrolyte composite may include a solid electrolyte in addition to $Li_2S$. For details of the solid electrolyte, the description of the $Li_2S$-carbon-solid electrolyte composite above may be referred to.

A composite of $Li_2S$, carbon, and a lithium salt includes $Li_2$, carbon, and a lithium salt. For carbon, the above-described composite of $Li_2S$ and carbon is referred to. The lithium salt is a compound that does not include sulfur (S). The lithium salt may be, for example, a binary compound including lithium and one element selected from Groups 13 to 17 of the periodic table of elements. The binary compound may include, for example, at least one selected from LiF, LiCl, LiBr, LiI, LiH, $Li_2S$, $Li_2O$, $Li_2Se$, $Li_2Te$, LisN, LisP, LisAs, LisSb, $Li_3Al_2$, and LiBs. The lithium salt may be, for example, a ternary compound composed of lithium and two elements selected from Groups 13 to 17 of the periodic table of elements. The ternary compound includes, for example, at least one selected from LisOCl, $LiPF_6$, $LiBF_4$, $LiSbF_6$, $LiAsF_6$, $LiClO_4$, $LiAlO_2$, $LiAlCl_4$, $LiNOs$, $Li_2CO_3$, $LiBH_4$, $Li_2SO_4$, LisBOs, $Li_3PO_4$, $Li_4NCl$, $Li_5NCl_2$, and $Li_3BN_2$. The lithium salt is, in particular, at least one lithium halide compound selected from LiF, LiCl, LiBr, and LiI. The composite of $Li_2S$, carbon, and a lithium salt may be, for example, a composite of Li2, carbon, and lithium halide. The composite of $Li_2S$, carbon, and a lithium salt may include a lithium halide compound so that ionic conductivity may be provided. The composite of $Li_2S$, carbon, and a lithium salt is distinguished form a simple mixture of $Li_2S$, carbon, and a lithium salt. In the simple mixture of $Li_2S$, carbon, and a lithium salt, a dense interface between $Li_2S$, carbon, and a lithium salt may not be maintained, and thus high interfacial resistance may be provided, which may reduce the lifespan characteristics of an all-solid secondary battery.

The composite of $Li_2S$ and a lithium salt includes a lithium salt. For the lithium salt, the lithium salt used in the above-described composite of $Li_2S$, carbon, and a lithium salt is referred to.

The $Li_2S$-metal carbide composite may include a metal carbide in addition to $Li_2S$. The metal carbide may be, for example, a two-dimensional metal carbide. The two-dimensional metal carbide may be represented by, for example, $M_{n+1}C_nT_x$ (M is a transition metal, T is a terminal group, T is O, OH, and/or F, n = 1, 2, or 3, and X is the number of terminal groups). The two-dimensional metal carbide may be, for example, $Ti_2CT_x$, $(Ti_{0.5}, Nb_{0.5})_2CT_x$, $Nb_2CT_x$, $V_2CT_x$, $Ti_3C_2T_x$, $(V_{0.5}, Cr_{0.5})_3C_2T_x$, $Ti_3CNT_x$, $Ta_4C_3T_x$, $Nb_4C_3T_x$, or a combination thereof. The surface of two-dimensional metal carbide may be terminated with O, OH, and/or F.

The $Li_2S$-carbon-metal carbide composite may include a carbon and a metal carbide in addition to $Li_2S$. The carbon may refer to the description of the $Li_2S$-carbon composite above. The metal carbide may refer to the description

of the Li$_2$S-metal carbide composite.

The Li$_2$S-metal nitride composite may include a metal nitride in addition to Li$_2$S. The metal nitride may be, for example, a two-dimensional metal nitride. The two-dimensional metal nitride may be represented by, for example, $M_{n+1}N_nT_x$ (M is a transition metal, T is a terminal group, T is O, OH, and/or F, n = 1, 2, or 3, and X is the number of terminal groups). The surface of two-dimensional metal nitride may be terminated with O, OH, and/or F.

The Li$_2$S-carbon-metal nitride composite may include a carbon and a metal nitride in addition to Li$_2$S. The carbon may refer to the description of the Li$_2$S-carbon composite above. The metal nitride may refer to the description of the Li$_2$S-metal nitride composite above.

In one or more embodiments, the amount of the sulfide-based cathode active material included in the cathode active material layer 12 may be, for example, about 10 wt% to about 90 wt%, about 10 wt% to about 80 wt%, about 10 wt% to about 70 wt%, about 10 wt% to about 60 wt%, or about 10 wt% to about 50 wt% with respect to the total weight of the cathode active material layer 12.

In one or more embodiments, the cathode active material layer 12 may further include, for example, a sulfide-based compound distinguished from Li$_2$S. The sulfide-based compound may be, for example, a compound including sulfur and a metal element other than Li. The sulfide-based compound may be, for example, a compound including sulfur and a metal element that has an atomic weight of 10 or more and belongs to Groups 1 to 14 in the Periodic Table of Elements. In one or more embodiments, the sulfide-based compound may be, for example, FeS$_2$, VS$_2$, NaS, MnS, FeS, NiS, CuS, or a combination thereof. Due to such a sulfide-based compound further included in the cathode active material layer, cycle characteristics of an all-solid secondary battery may be further improved. An amount of the sulfide-based compound distinguished from Li$_2$S included in the cathode active material layer 12 may be 10 wt% or less, 5 wt% or less, 3 wt% or less, or 1 wt% or less with respect to the total weight of the cathode active material layer 12.

**Cathode Layer: Solid Electrolyte**

In one or more embodiments, the cathode active material layer 12 may further include, for example, a solid electrolyte. The solid electrolyte may be a sulfide-based solid electrolyte, for example. The solid electrolyte included in the cathode layer 10 may be identical to or different from a solid electrolyte included in the solid electrolyte layer 30. For details of the solid electrolyte, the description of the solid electrolyte layer 30 may be referred to.

The solid electrolyte included in the cathode active material layer 12 may have a smaller median particle diameter (D50) than that of the solid electrolyte included in the solid electrolyte layer 30. For example, in some embodiments, the median particle diameter (D50) of the solid electrolyte included in the cathode active material layer 12 may be 90% or less, 80% or less, 70% or less, 60% or less, 50% or less, 40% or less, 30% or less, or 20% or less, relative to the median particle diameter (D50) of the solid electrolyte included in the solid electrolyte layer 30. Average particle diameter (D50) may be, for example, a median particle diameter (D50). Median particle diameter (D50) may refer to a particle size corresponding to a cumulative volume of 50 vol% as counted from the smallest particle size to the largest particle size in a particle size distribution measured by a laser diffraction method.

In one or more embodiments, an amount of the solid electrolyte included in the cathode active material layer 12 may be, for example, about 1 wt% to about 40 wt%, about 1 wt% to about 30 wt%, about 1 wt% to about 20 wt%, or about 1 wt% to about 10 wt%, with respect to the total weight of the cathode active material layer 12.

**Cathode Layer: Conductive Material**

In one or more embodiments, the cathode active material layer 12 may further include a conductive material. The conductive material may be, for example, a carbonaceous conductive material, a metal-based conductive material, or a combination thereof. Examples of the carbonaceous conductive material may include graphite, carbon black, acetylene black, Ketjen black, carbon fibers, and/or a combination thereof. However, the carbonaceous conductive material is not limited to the aforementioned examples and may be any material available as a carbonaceous conductive material in the art. The metal-based conductive material may be metal powder, metal fibers, or a combination thereof, but without being limited thereto, and may be any metal-based conductive material available in the art. For example, in one or more embodiments, an amount of the conductive material included in the cathode active material layer 12 may be about 1 wt% to about 30 wt%, about 1 wt% to about 20 wt%, or about 1 wt% to about 10 wt%, with respect to the total weight of the cathode active material layer 12.

**Cathode Layer: Binder**

In one or more embodiments, the cathode active material layer 12 may further include a binder. Examples of the binder may include styrene butadiene rubber (SBR), polytetrafluoroethylene, polyvinylidene fluoride, polyethylene, and/or the like, but without being limited to the aforementioned examples, any material available as a binder in the art may be utilized. The amount of the binder included in the cathode active material layer 12 may be, for example, about 1 wt% to about 10 wt% with respect to the total weight of the cathode active material layer 12. In some embodiments, the binder may not be provided.

**Cathode Layer: Other Additives**

In one or more embodiments, the cathode active material layer 12 may further include, for example, one or more additives such as a filler, a coating agent, a dispersing agent, and/or an ion-conducting agent in addition to the cathode active material, solid electrolyte, binder, and conductive material described above.

For the filler, coating agent, dispersing agent, and ion-conducting agent that may be included in the cathode active material layer 12, any suitable material generally utilized in electrodes of all-solid secondary batteries may be utilized.

**Cathode Layer: Cathode Current Collector**

For example, the cathode current collector 11 may utilize a plate, a foil, and/or the like, composed of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In some embodiments, the cathode current collector 11 may not be provided. In one or more embodiments, the cathode current collector 11 may have a thickness of, for example, about 1 $\mu$m to about 100 $\mu$m, about 1 $\mu$m to about 50 $\mu$m, about 5 $\mu$m to about 25 $\mu$m, or about 10 $\mu$m to about 20 $\mu$m.

The cathode current collector 11 may include, for example, a base film and a metal layer disposed on one surface or both surfaces of the base film. The base film may include, for example, a polymer. The polymer may be, for example, a thermoplastic polymer. The polymer may include, for example, polyethylene terephthalate (PET), polyethylene (PE), polypropylene (PP), polybutylene terephthalate (PBT), polyimide (PI), or combination thereof. The base film may include, for example, an insulator. Since the base film includes an insulating thermoplastic polymer, when a short circuit occurs, the base film may be softened or liquefied to block the operation of a battery, thereby suppressing a rapid increase in current. The metal layer may include indium (In), copper (Cu), magnesium (Mg), stainless steel, titanium (Ti), iron (Fe), cobalt (Co), nickel (Ni), zinc (Zn), aluminum (Al), germanium (Ge), or an alloy thereof. The metal layer may serve as an electrochemical fuse and may be cut during an overcurrent to perform a short circuit prevention function. A limit current and a maximum current may be adjusted by adjusting a thickness of the metal layer. The metal layer may be plated or deposited on the base film. When the thickness of the metal layer is decreased, the limit current and/or the maximum current of the cathode current collector 11 may be reduced, thereby improving the stability of a lithium battery during a short circuit. A lead tab may be added onto the metal layer to be connect to the outside. The lead tab may be welded to the metal layer or a metal layer/base film stack through ultrasonic welding, laser welding, spot welding, or the like. While the base film and/or the metal layer are melted during welding, the metal layer may be electrically connected to the lead tab. In order to more strongly weld the metal layer and the lead tab, a metal chip may be added between the metal layer and the lead tab. The metal chip may be a flake of the same material as a metal of the metal layer. The metal chip may be, for example, a metal foil or a metal mesh. The metal chip may be, for example, an aluminum foil, a copper foil, or a SUS foil. The metal chip may be disposed on the metal layer to then be welded to the lead tab so that the lead tab may be welded to a metal chip/metal layer stack or a metal chip/metal layer/base film stack. While the base film, the metal layer, and/or the metal chip are melted during welding, the metal layer or a metal layer/metal chip stack may be electrically connected to the lead tab. A metal chip and/or lead tab may be added to a portion on the metal layer. The base film may have, for example, a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. Since the base film has a thickness in such a range, a weight of an electrode assembly may be more effectively reduced. The base film may have, for example, a melting point of about 100 °C to about 300 °C, about 100 °C to about 250 °C, or about 100 °C to about 200 °C. Since the base film has a melting point in such a range, the base film may be melted and easily coupled to the lead tab in a process of welding the lead tab. Surface treatment such as corona treatment may be performed on the base film to improve adhesion between the base film and the metal layer. The base film may have, for example, a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 3 $\mu$m. Since the metal layer has a thickness in such a range, the stability of an electrode assembly may be secured while conductivity is maintained. The metal chip may have, for example, a thickness of about 2 $\mu$m to about 10 $\mu$m, about 2 $\mu$m to about 7 $\mu$m, or about 4 $\mu$m to about 6 $\mu$m. Since the metal chip has a thickness in such a range, connection between the metal layer and the lead tab may be more easily performed. Since the cathode current collector 11 has such a structure, a weight of a cathode may be reduced, thereby improving an energy density of the cathode and a lithium battery.

In one or more embodiments, the cathode current collector 11 may include, for example, a base film and a metal layer on (e.g., disposed on) one side or both (e.g., opposite) sides of the base film. The base film may include, for example, a polymer._ For example, the polymer may be a thermoplastic polymer._For example, the polymer may include polyethylene terephthalate (PET), polyethylene (PE), polypropylene (PP), polybutylene terephthalate (PBT), polyimide (PI), or a combination thereof._Due to inclusion of a thermoplastic polymer in the base film, the base film may get liquefied in the event of a short circuit and thus may prevent or reduce a rapid increase in electric current._For example, in some embodiments, the polymer may be an insulating body._ For example, the metal layer may include indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof. In one or more embodiments, the cathode current collector may further include a metal chip and/or a lead-tab._For details of the base film, the metal layer, the metal chip, and the lead-tab of the cathode current collector, the description provided with respect to an anode current collector may be referred to._As the cathode current collector has such a structure, the weight of the electrode may be reduced, and as a result, energy density may be improved.

**Anode Layer**

**Anode Layer: Anode Active Material**

Referring to FIG. 2 and FIG. 3, the anode layer 20 may include an anode current collector 21 and a first anode active material layer 22 on the anode current collector 21. The first anode active material layer 22 may include, for example, an anode active material and a binder.

The anode active material included in the first anode active layer 22 may be, for example, an anode material capable of forming an alloy or a compound with lithium.

The anode active material included in the anode active material layer 22 may have, for example, a particulate form. The anode active material having a particulate form may have an average particle diameter of, for example, 4 $\mu$m or less, 3 $\mu$m or less, 2 $\mu$m or less, 1 $\mu$m or less, 500 nm or less, 300 nm or less, or 100 nm or less. For example, in one or more embodiments, the anode active material having a particulate form may have an average particle diameter of about 10 nm to about 4 $\mu$m, about 10 nm to about 3 $\mu$m, about 10 nm to about 2 $\mu$m, about 10 nm to about 1 $\mu$m, about 10 nm to about 500 nm, about 10 nm to about 300 nm, or about 10 nm to about 100 nm. The anode active material having an average particle diameter within the above ranges may facilitate reversible absorption and/or desorption of lithium during charging/discharging. The average particle diameter of the anode active material may be, for example, a median particle diameter (D50) as measured by a laser-type or kind particle size distribution analyzer.

In one or more embodiments, the anode active material included in the first anode active material layer 22 may include, for example, at least one selected from among a carbonaceous anode active material and a metal or metalloid anode active material.

The carbonaceous anode active material may include, for example, amorphous carbon, crystalline carbon, porous carbon, or a combination thereof.

In some embodiments, the carbonaceous anode active material may be an amorphous carbon. Examples of the amorphous carbon may include carbon black (CB), acetylene black (AB), furnace black (FB), Ketjen black (KB), graphene, and/or the like, but the amorphous carbon is not necessarily limited thereto but may be any material classified as amorphous carbon in the art. Amorphous carbon is carbon with no crystalline structure or an extremely low degree of crystallinity and as such, can be distinguished from crystalline carbon or graphitic carbon.

In some embodiments, the carbonaceous anode active material may be porous carbon. For example, pores included in the porous carbon may have a pore volume of about 0.1 cc/g to about 10.0 cc/g, about 0.5 cc/g to about 5 cc/g, or about 0.1 cc/g to about 1 cc/g. For example, in some embodiments, pores included in the porous carbon may have an average pore diameter of about 1 nm to about 50 nm, about 1 nm to about 30 nm, or about 1 nm to about 10 nm. The BET specific surface of the porous carbon may be, for example, about 100 $m^2$/g to about 3,000 $m^2$/g.

The BET specific surface area of porous carbon can be measured, for example, according to ISO 9277:2022.

The metal or metalloid anode active material may include at least one selected from among gold (Au), platinum (Pt), palladium (Pd), silicon (Si), silver (Ag), aluminum (Al), bismuth (Bi), tin (Sn), and zinc (Zn), but embodiments of the present disclosure are not necessarily limited thereto. The metal or metalloid anode active material may be any metal anode active material or metalloid anode active material available in the art that can form an alloy or a compound with lithium. For example, nickel (Ni) does not form an alloy with lithium and is therefore not regarded as a metal anode active material.

The first anode active material layer 22 may include one of such anode active materials, or may include a mixture of multiple different anode active materials. For example, in some embodiments, the first anode active material layer 22 may include amorphous carbon alone or may include one or more selected from among gold (Au), platinum (Pt), palladium (Pd), silicon (Si), silver (Ag), aluminum (Al), bismuth (Bi), tin (Sn), and zinc (Zn). In some embodiments, the first anode active material layer 22 may include a mixture of amorphous carbon with at least one selected from among gold (Au), platinum (Pt), palladium (Pd), silicon (Si), silver (Ag), aluminum (Al), bismuth (Bi), tin (Sn), and zinc (Zn). A mixing ratio of amorphous carbon to the metal(s) described herein, such as gold (Au) in such a mixture may be about 99:1 to about 1:99, about 10:1 to about 1:2, about 5:1 to about 1:1, or about 4:1 to about 2:1 in weight ratio, but without being necessarily limited thereto, and may be selected according to required characteristics of the all-solid secondary battery. The anode active material having the above compositions may further improve cycle characteristics of the all-solid secondary battery.

In one or more embodiments, the anode active material included in the first anode active material layer 22 may include, for example, a mixture of first particles composed of amorphous carbon, and second particles composed of a metal or metalloid. Examples of the metal or metalloid may include gold (Au), platinum (Pt), palladium (Pd), silicon (Si), silver (Ag), aluminum (Al), bismuth (Bi), tin (Sn), zinc (Zn), and/or the like. In some embodiments, the metalloid may be a semiconductor. An amount of the second particles may be about 1 wt% to about 99 wt%, about 1 wt% to about 60 wt%, about 8 wt% to about 60 wt%, about 10 wt% to about 50 wt%, about 15 wt% to about 40 wt%, or about 20 wt% to about 30 wt%, with respect to the total weight of the mixture. As the amount of the second particle is within the above ranges, a further improvement in cycle characteristics of the all-solid secondary battery may be achieved. Alternatively, the first anode active material layer 22 includes a composite anode active material. The composite anode active material may include, for example, a carbon-based support and a metal-based anode active material supported on the carbon-based support. Since the composite anode active material has such a structure, it is possible to prevent the localization of the metal-based anode material in the first anode active material layer 22 and obtain the uniform distribution thereof. As a result, it is possible to further improve the cycle characteristics of the all-solid secondary battery 1 including the first anode active material layer 22.

The metal-based anode active material supported on the carbon-based support includes, for example, a metal, a metal oxide, a composite of a metal and a metal oxide, or a combination thereof. Examples of the metal include gold (Au), platinum (Pt), palladium (Pd), silicon (Si), silver (Ag), aluminum (Al), bismuth (Bi), tin (Sn), tellurium (Te), zinc (Zn), and the like. Examples of the metal oxide Gold (Au) oxide, platinum (Pt) oxide, palladium (Pd) oxide, silicon (Si) oxide, silver (Ag) oxide, aluminum (Al) oxide, bismuth (Bi) oxide, tin (Sn) oxide, tellurium (Te) oxide, zinc (Zn) oxide, and the like. The metal oxide may include, for example, $Au_xO_y$ (wherein $0<x\leq2$ and $0<y\leq3$), $Pt_xO_y$ (wherein $0<x\leq1$ and $0<y\leq2$), $Pd_xO_y$ (wherein $0<x\leq1$ and $0<y\leq1$), $Si_xO_y$ (wherein $0<x\leq1$ and $0<y\leq2$), $Ag_xO_y$ (wherein $0<x\leq2$ and $0<y\leq1$), $Al_xO_y$ (wherein $0<x\leq2$ and $0<y\leq3$), $Bi_xO_y$ (wherein $0<x\leq2$ and $0<y\leq3$), $Sn_xO_y$ (wherein $0<x\leq1$ and $0<y\leq2$), $Te_xO_y$ ($0<x\leq1$ wherein $0<y\leq3$), $Zn_xO_y$ ($0<x\leq1$ wherein $0<y\leq1$), or a combination thereof. The composite of a metal and a metal oxide may include, for example, a composite of Au and $Au_xO_y$ (wherein $0<x\leq2$ and $0<y\leq3$), a composite of Pt and $Pt_xO_y$ (wherein $0<x\leq1$ and $0<y\leq2$), a composite of Pd and $Pd_xO_y$ (wherein $0<x\leq1$ and $0<y\leq1$), a composite of Si and $Si_xO_y$ (wherein $0<x\leq1$ and $0<y\leq2$), a composite of Ag and $Ag_xO_y$ (wherein $0<x\leq2$ and $0<y\leq1$), a composite of Al and $Al_xO_y$ (wherein $0<x\leq2$ and $0<y\leq3$), a composite of Bi and $Bi_xO_y$ (wherein $0<x\leq2$ and $0<y\leq3$), a composite of Sn and $Sn_xO_y$ (wherein $0<x\leq1$ and $0<y\leq2$), a composite of Te and $Te_xO_y$ (wherein $0<x\leq1$ and\ $0<y\leq3$), a composite of Zn and $Zn_xO_y$ (wherein $0<x\leq1$ and $0<y\leq1$), or a combination thereof.

The carbon-based support includes, for example, amorphous carbon. Amorphous carbon includes, for example, CB, AB, furnace black (FB), KB, graphene, activated carbon, carbon nanofibers (CNFs), carbon nanotubes (CNTs), or the like, but is not necessarily limited thereto. Any material classified as amorphous carbon in the art may be used. Amorphous carbon is carbon that does not have crystallinity or has very low crystallinity and is distinguished from crystalline carbon or graphite-based carbon. A carbonaceous material is, for example, a carbon-based anode active material.

The composite anode active material has, for example, a particle form. The composite anode active material having a particle form has, for example, a particle diameter of about 10 nm to about 4 µm, about 10 nm to about 1 µm, about 10 nm to about 500 nm, about 10 nm to about 200 nm, or about 10 nm to about 100 nm. When the composite anode active material has a particle size in such a range, reversible absorbing and/or desorbing of lithium may be more easily performed during charging/discharging. The metal-based anode active material supported on the carbon-based support may have, for example, a particle form. The metal-based anode active material may have, for example, a particle diameter of about 1 nm to about 200 nm, about 1 nm to about 150 nm, about 5 nm to about 100 nm, or about 10 nm to about 50 nm. The carbon-based support may have, for example, a particle form. The carbon-based support having a particle form may have, for example, a particle diameter of about 10 nm to about 2 µm, about 10 nm to about 1 µm, about 10 nm to about 500 nm, about 10 nm to about 200 nm, or about 10 nm to about 100 nm. Since the carbon-based support has a particle diameter in such a range, the carbon-based support may be more uniformly disposed in the first anode active material layer 22. The carbon-based support may include, for example, nanoparticles having a particle diameter of 500 nm or less. The particle diameter of the composite anode active material, the particle diameter of the metal-based anode active material, and the particle diameter of the carbon-based support are, for example, average particle diameters. An average particle diameter is, for example, a median diameter (D50) measured using a laser type particle size distribution meter. Alternatively, an average particle diameter may be determined automatically using software from, for example, an electron microscope image or determined manually according to a manual.

**Anode Layer: Binder**

The binder included in the first anode active material layer 22 may be, for example, styrene butadiene rubber (SBR), polytetrafluoroethylene, polyvinylidene fluoride, polyethylene, a vinylidene fluoride/hexafluoropropylene copolymer, polyacrylonitrile, polymethylmethacrylate, and/or the like. However, the binder is not necessarily limited to the aforementioned examples and may be any material available as a binder in the art. The binder may be composed of a single type or kind of binder, or multiple binders of different types (kinds).

By including a binder in the first anode active material layer 22, the first anode active material layer 22 may be stabilized on the anode current collector 21. In addition, cracking in the first anode active material layer 22 may be inhibited despite volume changes and/or displacement of the first anode active material layer 22 during charging/discharging processes. For example, if (e.g., when) the first anode active material layer 22 does not contain any binder, the first anode active material layer 22 may be easily delaminated from the anode current collector 21. In an area where the anode current collector 21 is exposed as a result of delamination of the first anode active material layer 22 from the anode current collector 21, the anode current collector 21 may come in contact with the solid electrolyte layer 30, thus increasing the likelihood of a short circuit. For example, in one or more embodiments, the first anode active material layer 22 may be prepared by applying and drying a slurry having dispersed therein materials forming the first anode active material layer 22 on the anode current collector 21. By inclusion of a binder in the first anode active material layer 22, stable dispersion of anode active materials within the slurry may be achieved. For example, if (e.g., when) applying the slurry onto the anode current collector 21 by a screen printing method, it may prevent or reduce the screen from clogging (for example, clogging by aggregates of anode active material).

**Anode Layer: Other Additives**

In one or more embodiments, the first anode active material layer 22 may further include other additives utilized in an all-solid secondary battery, such as a filler, a coating agent, a dispersing agent, an ionically conductive aid, and/or the like.

**Anode Layer: Solid Electrolyte**

In one or more embodiments, the first anode material layer 22 may further include a solid electrolyte. The solid electrolyte may be, for example, a material selected from among solid electrolytes included in the solid electrolyte layer 30. The solid electrolyte included in the first anode active material layer 22 may act as a reaction point where formation of lithium metal starts, may act as a space where the formed lithium metal is stored, or may act as a route for transferring lithium ions in the first anode active material layer 22. In some embodiments, the solid electrolyte may not be provided.

For example, in the first anode material layer 22, an amount of the solid electrolyte may be high in a region adjacent to the solid electrolyte layer 30 and low in a region adjacent to the anode current collector 21. For example, the solid electrolyte in the first anode active material layer 22 may have a concentration gradient in which the concentration gradually decreases from a region adjacent to the solid electrolyte layer 30 to a region adjacent to the negative current collector 21.

**Anode Layer: First Anode Active Material Layer**

In one or more embodiments, a ratio (B/A) of initial charge capacity (B) of the first anode active material layer 22 to initial charge capacity (A) of the cathode active material layer 12 may be about 0.005 to about 0.45. The initial charge capacity of the cathode active material layer 12 may be determined by charging from a first open circuit voltage to a maximum charging voltage vs. Li/Li$^+$. The initial charge capacity of the first anode active material layer 22 may be determined by discharging from a second open circuit voltage to 0.01 V vs. Li/Li$^+$.

The maximum charging voltage may be determined by the type or kind of the cathode active material. The maximum charging voltage may be, for example, 1.5 V, 2.0 V, 2.5 V, 3.0 V, 3.5 V, 4.0 V, 4.2 V, or 4.3 V. For example, in some embodiments, the maximum charging voltage of Li$_2$S or a Li$_2$S composite may be 2.5 V vs. Li/Li$^+$. For example, in some embodiments, the maximum charging voltage of Li$_2$S or a Li$_2$S composite may be 3.0 V vs. Li/Li$^+$. The ratio (B/A) of initial charge capacity (B) of the first anode active material layer 22 to initial charge capacity (A) of the cathode active material layer 12 may be, for example, about 0.01 to about 0.3, about 0.01 to about 0.2, or about 0.05 to about 0.1.

The initial charge capacity (mAh) of the cathode active material layer 12 may be obtained by multiplying the charge specific capacity (mAh/g) of the cathode active material layer 12 by the mass (g) of a cathode active material in the cathode active material layer 12. If (e.g., when) multiple types (kinds) of cathode active materials are utilized, the product of charge specific density $\times$ mass may be calculated for each cathode active material, and the sum of these products may be defined as the initial charge capacity of the cathode active material layer 12. The initial charge capacity of the first anode active material layer 22 may also be calculated in substantially the same manner. The initial charge capacity of the first anode active material layer 22 may be obtained by multiplying the charge specific density (mAh/g) of an anode active material by the mass of the anode active material in the first anode active material layer 22. If (e.g., when) multiple types (kinds) of anode active materials are utilized, the product of charge specific density $\times$ mass may be calculated for each anode active material, and the sum of these products may be defined as the initial charge capacity of the first anode active material layer 22. Here, the charge specific density of each of the cathode active material and the anode active material may be measured utilizing an all-solid half cell utilizing lithium metal as a counter electrode. The initial charge capacity of each of the cathode active material layer 12 and the first anode active material layer 22 may be directly measured by utilizing an all-solid half-cell at a constant current density, for example, 0.1 mA/cm$^2$. For the cathode, this measurement may be made for an operating voltage from a 1$^{st}$ open circuit voltage (OCV) to a maximum charge voltage, for example, 3.0 V (vs. Li/Li$^+$). For the anode, this measurement may be made for an operating voltage from a second OCV to 0.01 V with respect to the anode, for example, lithium metal. For example, the all-solid half cell having the cathode active material layer may be charged with a constant current of 0.1 mA/cm$^2$ to 3.0 V from the 1$^{st}$ OCV, and the all-solid half cell having the first anode active material layer may be charged with a constant current of 0.1 mA/cm$^2$ to 0.01 V from the second OCV. For example, the current density during the constant current charging may be 0.2 mA/cm$^2$ or 0.5 mA/cm$^2$. The all-solid half cell having the cathode active material layer may be charged, for example, to 2.5 V, 3.0 V, 3.5 V, or 4.0 V from the first OCV. The maximum charge voltage of the cathode active material layer may be determined according to the maximum voltage of a cell that satisfies the safety conditions described in JISC8712:2015 by Japanese Standards Association.

If (e.g., when) the initial charge capacity of the first anode active material layer 22 is excessively small, the thickness of the first anode active material layer 22 becomes extremely small, and as a result, lithium dendrites formed between the first anode active material layer 22 and the anode current collector 21 during repeated charging/discharging processes may cause collapse of the first anode active material layer 22, thus making it difficult to improve cycle characteristics of the all-solid secondary battery. If (e.g., when) the charge capacity of the first anode active material layer 22 is excessively large, the energy density of the all-solid secondary battery decreases, and the internal resistance of the all-solid secondary battery by the first anode active material layer 22 increases, thus making it difficult to improve the cycle characteristics of the all-solid secondary battery.

For example, in one or more embodiments, the first anode active material layer 22 may have a thickness of 50% or less, 40% or less, 30% or less, 20% or less, 10% or less, or 5% or less, with respect to the thickness of the cathode active material layer 12. For example, in some embodiments, the first anode active material layer 22 may have a thickness of about 1 % to about 50 %, about 1 % to about 40 %, about 1 % to about 30 %, about 1 % to about 20 %, about 1 % to about 10 %, or about 1 % to about 5 %, with respect to the thickness of the cathode active material layer 12. For example, in some embodiments, the first anode active material layer 22 may have a thickness of about 1 $\mu$m to about 20 $\mu$m, about 2 $\mu$m to about 15 $\mu$m, or about 3 $\mu$m to about 10 $\mu$m. If (e.g., when) the thickness of the first anode active material layer 22 is excessively small, lithium dendrites formed between the first anode active material layer 22 and the anode current collector 21 may cause collapse of the first anode active material layer 22, thus making it difficult to achieve improvement in cycle characteristics of the all-solid secondary battery. If (e.g., when) the thickness of the first anode active material layer 22 is excessively large, the energy density of the all-solid secondary battery may decrease, and the internal resistance of the all-solid secondary battery by the first anode active material layer 22 may increase, thus making it difficult to achieve improvement in cycle characteristics of the all-solid secondary battery. With decreasing thickness of the first anode active material layer 22, for example, the initial charge capacity of the first anode active material layer 22 may also decrease.

**Anode Layer: Second Anode Active Material Layer**

In one or more embodiments, the all-solid secondary battery may further include, for example, a second anode active material layer that is disposed between the anode current collector 21 and the first anode active material layer 22 after charging. The second anode active material layer may be a metal layer including lithium or a lithium alloy. The metal layer may include lithium or a lithium alloy. As such, the second anode active material layer, being a metal layer containing lithium, may serve as a lithium reservoir, for example. The lithium alloy may include, for example, a Li-Al alloy, a Li-Sn alloy, a Li-In alloy, a Li-Ag alloy, a Li-Au alloy, a Li-Zn alloy, a Li-Ge alloy, a Li-Si alloy, and/or the like, but without being limited thereto, and may be any material available as a lithium alloy in the art. The second anode active material layer may be composed of one of such alloys, or lithium, or may be composed of one or more suitable types (kinds) of such alloys. In some embodiments, the second anode active material layer may be, for example, a plated layer. For example, the second anode active material layer may be plated or deposited between the first anode active material layer 22 and the anode current collector 21 during a charging process of the all-solid secondary battery.

The second anode active material layer is not limited to any particular thickness, but may have a thickness of, for example, about 1 $\mu$m to about 500 $\mu$m, about 1 $\mu$m to about 200 $\mu$m, about 1 $\mu$m to about 150 $\mu$m, about 1 $\mu$m to

about 100 μm, or about 1 μm to about 50 μm. If (e.g., when) the thickness of the second anode active material layer is excessively small, the second anode active material layer may fail to sufficiently function as a lithium reservoir. If (e.g., when) the thickness of the second anode active material layer is excessively large, the mass and volume of the all-solid secondary battery may increase, and the cycle characteristics of the all-solid secondary battery are more likely to deteriorate.

In some embodiments, in the all-solid secondary battery, the second anode active material layer may be disposed between the anode current collector 21 and the first anode active material layer 22 prior to assembly of the all-solid secondary battery, for example. As shown in FIG. 3, when a second anode active material layer 23 is positioned between the anode current collector 21 and the first anode active material layer 22 prior to assembly of the all-solid secondary battery, the second anode active material layer 23 due to being a metal layer containing lithium, may act as a lithium reservoir. For example, prior to assembly of the all-solid secondary battery, a lithium foil may be positioned between the anode current collector 21 and the first anode active material layer 22.

If (e.g., when) the second anode active material layer is plated upon charging after assembly of the all-solid secondary battery, the second anode active material layer may not be included at the time of assembly of the all-solid secondary battery, and therefore, energy density of the all-solid secondary battery may increase. When charging the all-solid secondary battery, the charging may be performed to exceed the charging capacity of the first anode active material layer 22. For example, the first anode active material layer 22 may be overcharged. At the beginning of the charging, lithium may be absorbed into the first anode active material layer 22. The anode active material included in the first anode active material layer 22 may form an alloy or a compound with lithium ions moved from the cathode layer 10. When the charging is performed exceeding the capacity of the first anode active material layer 22, lithium is plated, for example, on the back surface of the first anode active material layer 22, that is, between the anode current collector 21 and the first anode active material layer 22, and then the plated lithium forms a metal layer that corresponds to the second anode active material layer. The second anode active material layer may be a metal layer mainly composed of lithium (i.e., metal lithium). This result may be attributed to the fact that the anode active material included in the first anode active material layer 22 includes a material that forms an alloy or compound with lithium. During discharge, lithium of the first anode active material layer 22 and the second anode active material layer, that is, a metal layer, is ionized and migrates toward the cathode layer 10. Therefore, lithium may be utilized as an anode active material in the all-solid secondary battery.

In some embodiments, because the first anode active material layer 22 is coated on the second anode active material layer, the first anode active material layer 22 may function as a protective layer for the second anode active material layer 23, that is, the metal layer, while inhibiting precipitation and growth of lithium dendrites. Therefore, short circuiting and capacity fading in the all-solid secondary battery may be inhibited, and consequently, cycle characteristics of the all-solid secondary battery may improve. In some embodiments, when the second anode active material layer is disposed by charging after assembly of the all-solid secondary battery, the anode layer 20, that is, the anode current collector 21, the first anode active material layer 22, and the area therebetween, is a Li-free region free of Li while the all-solid secondary battery is in the initial state or fully discharged state.

**Anode Layer: Anode Current Collector**

The anode current collector 21 may be formed of a material that does not react with lithium, that is, does not form an alloy or a compound with lithium. Examples of the material forming the anode current collector 21 may include copper (Cu), stainless steel, titanium (Ti), iron (Fe), cobalt (Co), nickel (Ni), and/or the like. However, the material forming the anode current collector 21 is not necessarily limited to the aforementioned materials but may be any material available as an electrode current collector in the art. The anode current collector 21 may be formed of one of the aforementioned metals, an alloy of two or more metals thereof, or a coating material thereof. The anode current collector 21 may be, for example, a plate shape or a foil shape.

Although not shown in the drawings, the anode current collector 21 may include, for example, a base film and a metal layer disposed on one surface or both surfaces of the base film. The base film may include, for example, a polymer. The polymer may be, for example, a thermoplastic polymer. The polymer may include, for example, PET, PE, PP, PBT, PI, or combination thereof. The polymer may be an insulating polymer. Since the base film includes an insulating thermoplastic polymer, when a short circuit occurs, the base film may be softened or liquefied to block the operation of a battery, thereby suppressing a rapid increase in current. The metal layer may include, for example, copper (Cu), stainless steel, titanium (Ti), iron (Fe), cobalt (Co), nickel (Ni), or an alloy thereof. The anode current collector 21 may additionally include a metal chip and/or a lead tab. For more specific details of the base film, the metal layer, the metal chip, and the lead tab of the anode current collector 21, the above-described cathode current collector 11 is referred to. Since the anode current collector 21 has such a structure, a weight of an anode may be reduced, thereby improving an energy density of the anode and a lithium battery.

In one or more embodiments, the anode current collector 21 may include, for example, a base film and a metal layer on (e.g., disposed on) one side or both (e.g., opposite) sides of the base film. The base film may include, for example, a polymer._ For example, in some embodiments, the polymer may be a thermoplastic polymer._For example, in one or more embodiments, the polymer may include polyethylene terephthalate (PET), polyethylene (PE), polypropylene (PP), polybutylene terephthalate (PBT), polyimide (PI), or a combination thereof._Due to inclusion of a thermoplastic polymer in the base film, the base film may get liquefied in the event of a short circuit and thus may prevent or reduce a rapid increase in electric current._For example, in some embodiments, the polymer may be an insulating body._The metal layer may include, for example, copper (Cu), stainless steel, titanium (Ti), iron (Fe), cobalt (Co), nickel (Ni), or an alloy thereof._The metal layer may act as an electrochemical fuse by being disconnected in the event of an overcurrent, to thereby provide protection against short circuits._Limiting current and peak current may be controlled or selected through controlling the thickness of the metal layer. The metal layer may be plated or deposited on the base film._With decreasing thickness of the metal layer, the limiting current and/or peak current of the anode current collector decrease, and therefore, the stability of the lithium battery may be improved in case of a short circuit. In some embodiments, a lead-tab may be added on the metal layer for external connection._The lead-tab may be welded to the metal layer or a metal layer/base film laminate by ultrasonic welding, laser welding, spot welding, and/or the like._As the base film and/or the metal layer melt during welding, the metal layer may be electrically connected to the lead-tab. To further secure the welding between the metal layer and the lead-tab, a metal chip may be added between the metal layer and the lead-tab. The metal chip may be a flake of the same material as the metal of the metal layer._For example, the metal chip may be a metal foil, a metal mesh, and/or the like._For example, the metal chip may be an aluminum foil, a copper foil, an SUS foil, and/or the like._By welding the lead-tab after placing the metal chip on the metal layer, the lead-tab may be welded to a metal chip/metal layer laminate or a metal chip/metal layer/base film laminate._As the base film, the metal layer, and/or the metal chip melt during welding, the metal layer or the metal layer/metal chip laminate may be electrically connected to the lead-tab. In some embodiments, a metal chip and/or a lead-tab may be further added to a portion of the metal layer. For example, in one or more embodiments, the base film may have a thickness of about 1 $\mu$m to about 50 $\mu$m, about 1.5 $\mu$m to about 50 $\mu$m, about 1.5 $\mu$m to about 40 $\mu$m, or about 1 $\mu$m to about 30 $\mu$m. If (e.g., when) the base film has a thickness within the above ranges, reduction of the weight of the electrode assembly may be more effectively achieved. For example, the base film may have a melting point of about 100 °C to 300 °C, about 100 °C to about 250 °C, or about 100 °C to about 200 °C. As the base film has a melting point within the above ranges, during the process of welding the lead-tab, the base film may melt and be easily bonded to the lead-tab. In some embodiments, to improve bonding strength between the base film and the metal layer, a surface treatment such as corona treatment may be performed on the base film. For example, in one or more embodiments, the metal layer may have a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 1 $\mu$m. If (e.g., when) the metal layer has a thickness within the above ranges, stability of the electrode assembly may be ensured while maintaining conductivity. For example, in some embodiments, the metal chip may have a thickness of about 2 $\mu$m to about 10 $\mu$m, about 2 $\mu$m to about 7 $\mu$m, or about 4 $\mu$m to about 6 $\mu$m. If (e.g., when) the metal chip has a thickness within the above ranges, connection between the metal layer and the lead-tab may be more easily performed. As the anode current collector 21 has such a structure, the weight of the electrode may be reduced and as a result, energy density of may be improved.

In one or more embodiments, the all-solid secondary battery may further include a thin film containing an element alloyable with lithium on one side of the anode current collector 21. The thin film may be positioned between the anode current collector 21 and the anode active material layer 22. The thin film may include, for example, an element capable of forming an alloy with lithium. Examples of the element capable of forming an alloy with lithium may include gold, silver, zinc, tin, indium, silicon, aluminum, bismuth, and/or the like, but without being limited thereto, any element available in the art that is capable of forming an alloy with lithium may be utilized. The thin film may include (e.g., consist of) one of the aforementioned metals, or may include (e.g., consist of) an alloy of different types (kinds) of metals. As the thin film is disposed on the anode current collector 21, the plated form of the second anode active material layer being plated between the thin film and the first anode active material layer 22 may be further flattened, and cycle characteristics of the all-solid secondary battery may further improve.

A thickness of the thin film may be, for example, from about 1 nm to about 800 nm, about 10 nm to about 700 nm, about 50 nm to about 600 nm, or about 100 nm to about 500 nm. If (e.g., when) the thickness of the thin film is less than 1 nm, it may be difficult to achieve functions attributable to the thin film. If (e.g., when) the thickness of the thin film is excessively large, it causes the thin film to absorb lithium by itself, decreasing the amount of lithium precipitated at the anode. As a result, the all-solid battery may have decreased energy density and cycling characteristics of the all-solid secondary battery may deteriorate. The thin film may be disposed on the anode current collectors 21 by a method such as a vacuum deposition method, a sputtering method, and a plating method. However, without being limited to the aforementioned methods, any method available in the art that is capable of forming a thin film may be utilized.

The volume expansion rate, that is, a ratio of the volume of the all-solid secondary battery before charging to the volume of the all-solid secondary battery after charging, may be 15% or less, 10% or less, or 5% or less, for example.

Volume changes of the anode layer 20 during charging of the all-solid secondary battery may be mitigated by reduction in the volume of the cathode layer 10, and/or a inert member is included to accommodate volume changes of the anode layer 20, and thus volume changes of the all-solid secondary battery before and after charging may be further mitigated.

In one or more embodiments, the all-solid secondary battery may have a volumetric energy density of, for example, about 500 Wh/L to about 900 Wh/L, about 500 Wh/L to about 800 Wh/L or about 500 Wh/L to about 700 Wh/L. In one or more embodiments, the all-solid secondary battery may have a gravimetric energy density of, for example, about 350 Wh/g to about 600 Wh/g, about 350 Wh/g to about 580 Wh/g, about 350 Wh/g to about 570 Wh/g, or about 350 Wh/g to about 550 Wh/g. As the all-solid secondary battery has an energy density in the above ranges, the all-solid secondary battery may provide an improved energy density compared to a secondary battery.

**Solid Electrolyte Layer**

**Solid Electrolyte Layer: Solid Electrolyte**

Referring to FIG. 2 and FIG. 3, the solid electrolyte layer 30 may include a solid electrolyte between the cathode layer 10 and the anode layer 20.

For example, the solid electrolyte layer 30 may include comprises an electrolyte, and the electrolyte comprises a solid electrolyte, a gel electrolyte or a combination thereof,

Examples of the solid electrolyte may include a sulfide-based solid electrolyte, an oxide-based solid electrolyte, a polymer solid electrolyte, or a combination thereof.

In one or more embodiments, the solid electrolyte may be, for example, a sulfide-based solid electrolyte. The sulfide-based solid electrolyte may be, for example, at least one selected from among $Li_2S-P_2S_5$ and $Li_2S-P_2S_5-LiX$, wherein X is a halogen element; $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, and $Li_2S-P_2S_5-Z_mS_n$, wherein m and n each are a positive number, and Z is Ge, Zn or Ga; $Li_2S-GeS_2$, $Li_2S-SiS_2-Li_3PO_4$, and $Li_2S-SiS_2-Li_pMO_q$, wherein p and q each are a positive number and M is P, Si, Ge, B, Al, Ga or In; $Li_{7-x}PS_{6-x}Cl_x$, wherein $0 \leq x \leq 2$; and $Li_{7-x}PS_{6-x}Br_x$, wherein $0 \leq x \leq 2$; and $Li_{7-x}PS_{6-x}I_x$, wherein $0 \leq x \leq 2$. The sulfide-based solid electrolyte may be prepared by treating starting materials, such as $Li_2S$ and $P_2S_5$, by a method such as melt-quenching, mechanical milling, and/or the like. In some embodiments, after such a treatment, a heat-treatment may be conducted. The sulfide-based solid electrolyte may be amorphous or crystalline, or may be in a mixed state thereof. In some embodiments, the solid electrolyte may be, among the sulfide-based solid electrolyte materials described herein, a material that contains at least sulfur (S), phosphorus (P), and lithium (Li), as its constitutive elements. For example, the solid electrolyte may be a material including $Li_2S-P_2S_5$. If (e.g., when) a sulfide-based solid electrolyte material utilized to form the solid electrolyte contains $Li_2S-P_2S_5$, the mixing molar ratio of $Li_2S : P_2S_5$ may be in a range of, for example, about 20 : 80 to about 90 : 10, about 25 : 75 to about 90 : 10, about 30 : 70 to about 70: 30, or about 40: 60 to about 60: 40.

For example, in one or more embodiments, the sulfide-based solid electrolyte may include an argyrodite-type or kind solid electrolyte (e.g., an argyrodite solid electrolyte) represented by Formula 1:

**Formula 1** $\quad Li^+_{12-n-x}A^{n+}X^{2-}_{6-x}Y^-_x$

In Formula 1, A may be P, As, Ge, Ga, Sb, Si, Sn, Al, In, Ti, V, Nb, or Ta, X may be S, Se, or Te, Y may be Cl, Br, I, F, CN, OCN, SCN, or $N_3$, and $1 \leq n \leq 5$ and $0 < x < 2$ may be satisfied.

For example, in some embodiments, the sulfide-based solid electrolyte may be an argyrodite-type or kind compound including one or more selected from among $Li_{7-x}PS_{6-x}Cl_x$ wherein $0 \leq x \leq 2$, $Li_{7-x}PS_{6-x}Br_x$ wherein $0 \leq x \leq 2$, and $Li_{7-x}PS_{6-x}I_x$ wherein $0 \leq x \leq 2$. For example, in some embodiments, the sulfide-based solid electrolyte may be an argyrodite-type or kind compound including at least one selected from among $Li_6PS_5Cl$, $Li_6PS_5Br$, and $Li_6PS_5I$.

An argyrodite-type or kind solid electrolyte may have a density of about 1.5 g/cc to about 2.0 g/cc. As the argyrodite-type or kind solid electrolyte has a density of 1.5 g/cc or more, internal resistance of the all-solid secondary battery may be reduced, and Li penetration to the solid electrolyte layer may be more effectively suppressed or reduced.

For example, the oxide-based all-solid electrolyte may be $Li_{1+x+y}Al_xTi_{2-x}Si_yP_{3-y}O_{12}$ ($0 < x < 2$ and $0 \leq y < 3$), $BaTiO_3$, $Pb(Zr,Ti)O_3$(PZT), $Pb_{1-x}La_xZr_{1-y}Ti_yO_3$(PLZT) ($0 \leq x < 1$, $0 \leq y < 1$), $Pb(Mg_3Nb_{2/3})O_3-PbTiO_3$(PMN-PT), $HfO_2$, $SrTiOs$, $SnO_2$, $CeO_2$, $Na_2O$, $MgO$, $NiO$, $CaO$, $BaO$, $ZnO$, $ZrO_2$, $Y_2O_3$, $Al_2O_3$, $TiO_2$, $SiO_2$, $Li_3PO_4$, $Li_xTi_y(PO_4)_3$ ($0 < x < 2$ and $0 < y < 3$), $Li_xAl_yTi_z(PO_4)_3$ ($0 < x < 2$, $0 < y < 1$, and $0 < z < 3$), $Li_{1+x+y}(Al, Ga)_x(Ti, Ge)_{2-x}Si_yP_{3-y}O_{12}$ ($0 \leq x \leq 1$ and $0 \leq y \leq 1$), $Li_xLa_yTiO_3$ ($0 < x < 2$ and $0 < y < 3$), $Li_2O$, $LiOH$, $Li_2CO_3$, $LiAlO_2$, $Li_2O-Al_2O_3-SiO_2-P_2O_5-TiO_2-GeO_2$, $Li_{3+x}La_3M_2O_{12}$ (M = Te, Nb, or Zr, and $0 \leq x \leq 10$), or a combination thereof. The oxide-based solid electrolyte may be produced, for example, by a sintering method and/or the like.

For example, in some embodiments, the oxide-based solid electrolyte may be a garnet-type or kind solid electrolyte selected from among $Li_7La_3Zr_2O_{12}$ (LLZO) and $Li_{3+x}La_3Zr_{2-a}M_aO_{12}$ (M doped LLZO, M=Ga, W, Nb, Ta, or Al, and 0<a<2 and 0≤x≤10).

For example, the polymer solid electrolyte may be an electrolyte that includes a mixture of a lithium salt and a polymer, or includes a polymer having an ion-conducting functional group. The polymer solid electrolyte may be, for example, a polymer electrolyte in a solid state at a temperature of about 25 °C and a pressure of about 1 atm. For example, in some embodiments, the polymer solid electrolyte may be a polymer electrolyte not containing a liquid electrolyte. For example, a polymer included in the polymer solid electrolyte may be polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, polystyrene sulfonate (PSS), polyvinyl fluoride (PVF), poly(methylmethacrylate) (PMMA), polyethylene glycol (PEG), polyacrylonitrile (PAN), polytetrafluoroethylene (PTFE), polyethylenedioxythiophene (PEDOT), polypyrrole (PPY), polyacrylonitrile (PAN), polyaniline, polyacetylene, Nafion, Aquivion, Flemion, Gore, Aciplex, Morgane ADP, sulfonated poly(ether ether ketone) (SPEEK), sulfonated poly(arylene ether ketone ketone sulfone (SPAEKKS), sulfonated poly(aryl ether ketone (SPAEK), poly[bis(benzimidazobenzisoquinolinones)] (SPBIBI), poly(styrene sulfonate) (PSS), and lithium 9,10-diphenylanthracene-2-sulfonate (DPASLi+), or a combination thereof. However, the polymer is not limited to the aforementioned examples and may be any material available in the art that is utilized in polymer electrolyte. The lithium salt may be any lithium salt available in the art. The lithium salt may be, for example, $LiPF_6$, $LiBF_4$, $LiSbF_6$, $LiAsF_6$, $LiClO_4$, $LiCF_sSO_s$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (x and y are each an integer of 1 to 20), LiCl, LiI, or a mixture thereof. The polymer included in the polymer solid electrolyte may be, for example, a compound including 10 or more, 20 or more, 50 or more, or 100 or more repeating units. The polymer included in the polymer solid electrolyte may have, for example, a weight average molecular weight of 1,000 Dalton or more, 10,000 Dalton or more, 100,000 Dalto or more, or 1,000,000 Dalton or more..

A gel electrolyte may be, for example, a polymer gel electrolyte. The gel electrolyte may have a gel state without including, for example, a polymer.

For example, in one or more embodiments, a gel electrolyte may be utilized in the solid electrolyte layer 30 and may be a polymer gel electrolyte. For example, the polymer gel electrolyte may be an electrolyte that includes a liquid electrolyte and a polymer, or includes an organic solvent and a polymer having an ion-conducting functional group. The liquid electrolyte may be, for example, an ionic liquid, a mixture of a lithium salt and an organic solvent, a mixture of an ionic liquid and an organic solvent, or a mixture of lithium salt, an ionic liquid, and an organic solvent. The polymer may be selected from among polymers utilized in solid polymer electrolytes. The organic solvent may be selected from among organic solvents utilized in liquid electrolytes. The lithium salt may be selected from among lithium salts utilized in solid polymer electrolytes. The ionic liquid may refer to a room-temperature molten salt or a salt that is in a liquid state at room temperature, which includes (e.g., consists of) ions alone and has a melting point of room temperature or less. For example, the ionic liquid may be at least one selected from among compounds containing: a) at least one cation selected from among ammonium, pyrrolidinium, pyridinium, pyrimidinium, imidazolium, piperidinium, pyrazolium, oxazolium, pyridazinium, phosphonium, sulfonium, triazolium, and a mixture thereof; and b) at least one anion selected from among $BF_4^-$, $PF_6^-$, $AsF_6^-$, $SbF_6^-$, $AlCl_4^-$, $HSO_4^-$, $ClO_4^-$, $CH_3SO_3^-$, $CF_3CO_2^-$, $Cl^-$, $Br^-$, $I^-$, $SO_4^-$, $CF_3SO_3^-$, $(FSO_2)_2N^-$, $(C_2F_5SO_2)_2N^-$, $(C_2F_5SO_2)(CF_3SO_2)N^-$, and $(CF_3SO_2)_2N^-$. The polymer solid electrolyte may form a gel polymer electrolyte by being impregnated in an electrolyte solution in a lithium battery. The gel electrolyte may further include inorganic particles.

. A polymer included in the polymer gel electrolyte may be, for example, a compound including 10 or more, 20 or more, 50 or more, or 100 or more repeating units. The polymer included in the polymer gel electrolyte may have, for example, a weight average molecular weight of 500 Dalton or more, 1,000 Dalton or more, 10,000 Dalton or more, 100,000 Dalton or more, or 1,000,000 Dalton or more.

According to one or more embodiments, a polymer solid electrolyte may include, for example, a dry polymer electrolyte, a gel polymer electrolyte, or a combination thereof.

The dry polymer electrolyte may be, for example, an electrolyte which is a mixture of a lithium salt and a polymer. For example, the dry polymer electrolyte may be a polymer electrolyte not containing a liquid electrolyte. The polymer included in the dry polymer electrolyte may be, for example, polyethylene oxide (PEO), polyvinylidene fluoride (PVDF), vinylidene fluoride-hexafluoropropylene (PVDF-HFP), polyethylene oxide (PEO), a poly(styrene-b-ethylene oxide) block copolymer (PS-PEO), poly(styrene-butadiene), poly(styrene-isoprene-styrene), a poly(styrene-b-divinylbenzene) block copolymer, a poly(styrene-ethylene oxide-styrene) block copolymer, or a combination thereof.

The gel polymer electrolyte may be an electrolyte including a liquid electrolyte and a polymer. The liquid electrolyte may be, for example, a mixture of a lithium salt and an organic solvent. The polymer utilized in the gel polymer electrolyte may be selected from among polymers included in a dry polymer electrolyte.

The solid electrolyte layer 30 may be impermeable to lithium polysulfides. Therefore, side reactions between an anode layer and lithium polysulfides generated upon cycling of a sulfide-based cathode active material may be inhibited. As a result, an improvement of cycle characteristics of the all-solid secondary battery including the solid electrolyte layer 30 may be achieved.

**Solid Electrolyte Layer: Binder**

In one or more embodiments, the solid electrolyte layer 30 may further include, for example, a binder. Examples of the binder included in the solid electrolyte layer 30 may include styrene butadiene rubber (SBR), polytetrafluoroethylene, polyvinylidene fluoride, polyethylene, and/or the like. However, the binder is not limited to the aforementioned examples and may be any binder available in the art. The binder in the solid electrolyte layer 30 may be identical to or different from binders included in the cathode active material layer 12 and the anode active material layer 22. In some embodiments, the binder may not be provided.

An amount of the binder included in the solid electrolyte layer 30 may be, about 0 wt% to about 10 wt%, about 0 wt% to about 5 wt%, about 0 wt% to about 3 wt%, about 0 wt% to about 1 wt%, about 0 wt% to about 0.5 wt%, or about 0 wt% to about 0.1 wt%, relative to the total weight of the solid electrolyte layer 30.

An all-solid secondary battery according to one or more embodiments may further include a liquid electrolyte, a solid electrolyte, a gel electrolyte, or a combination thereof.

According to one or more embodiments of the present disclosure, a method of preparing the composite cathode active material may include: applying a lithium-containing sulfide-based compound; applying a composite; and applying a first carbonaceous material, wherein the lithium-containing sulfide-based compound, the composite, and the first carbonaceous material may be mechanically milled to prepare the composite cathode active material, the composite may include at least one first metal oxide represented by formula $M_aO_b$ ($0<a\leq3$ and $0<b<4$, wherein if (e.g., when) a is 1, 2, or 3, b is not an integer); and the first carbonaceous material, wherein the first metal oxide may be disposed in a matrix of the first carbonaceous material, and M may be at least one metal selected from among Groups 2 to 13, Group 15, and Group 16 in the Periodic Table of Elements. The mechanically milling method in the mechanical milling is not particularly limited, and may be any method usable in the art that may contact a lithium-containing sulfide-based compound with a composite by a mechanical means.

A lithium-containing sulfur-based compound (e.g., a lithium-containing sulfide-based compound) may be provided.

Subsequently, a composite may be provided.

In one or more embodiments, the applying of the composite may include, for example, supplying a reaction gas including (e.g., consisting of) a carbon source gas to a structure including a metal oxide and performing heat treating the resulting structure to provide a composite to prepare the composite.

In one or more embodiments, the applying of a composite may include, for example, applying an undoped composite by supplying a reaction gas including (e.g., consisting of) a carbon source gas to at least one second metal oxide represented by $M_aO_c$ ($0<a\leq3$ and $0<c\leq4$, wherein if (e.g., when) a is 1, 2, or 3, b is an integer) and conducting a heat-treatment, wherein M may be at least one metal selected from among elements of Groups 2 to 13, Group 15, and Group 16 of the Periodic Table of Elements.

The carbon source gas may be a gas including (e.g., consisting of) a compound represented by Formula 7 or may be a mixed gas containing at least one selected from among a compound represented by Formula 7, a compound represented by Formula 8, and an oxygen-containing gas represented by Formula 9.

**Formula 7**          $C_nH_{(2n+2-a)}[OH]_a$

In Formula 7, n may be 1 to 20, and a may be 0 or 1;

**Formula 8**          $C_nH_{2n}$

In Formula 8, n may be 2 to 6;

**Formula 9**          $C_xH_yO_z$

In Formula 9, x may be 0 or an integer of 1 to 20, y may be 0 or an integer of 1 to 20, and z may be 1 or 2.

The compound represented by Formula 7 and the compound represented by Formula 8 may be one or more selected from among methane, ethylene, propylene, methanol, ethanol, and propanol. An oxygen-containing gas represented by Formula 9 may include, for example, carbon dioxide ($CO_2$), carbon monoxide (CO), water vapor ($H_2O$), or a mixture thereof.

After supplying of a reaction gas including (e.g., consisting of) a carbon source gas to a second metal oxide represented by $M_aO_b$ ($0<a\leq3$ and $0<c\leq4$, and if (e.g., when) a is 1, 2, or 3, c is an integer) and performing a heat treatment, there may be a cooling process further performed utilizing at least one inert gas selected from among nitrogen, helium, and argon. The cooling process may refer to a process of adjusting a temperature to room temperature (20-25 °C). In some embodiments, the carbon source gas may include at least one inert gas selected from among nitrogen, helium, and argon.

In the method of preparing the composite, the process of growing a carbonaceous material, for example, graphene, may be carried out under one or more suitable conditions depending on a gas-phase reaction.

In one or more embodiments, according to a first condition, for example, methane may be first supplied to a reactor loaded with a second metal oxide represented by $M_aO_c$ (0<a≤3 and 0<c≤4, and if (e.g., when) a is 1, 2, or 3, c is an integer), before elevating a temperature to a heat treatment temperature (T). The heat treatment temperature (T) may be reached over a duration of about 10 minutes to about 4 hours, and the heat treatment temperature (T) may be in a range of about 700 °C to about 1,100 °C. At the heat treatment temperature (T), the heat treatment may be carried out for the duration of a reaction time. The reaction time may be, for example, about 4 hours to about 8 hours. The thermally treated product may be cooled to room temperature to produce a composite. The process of cooling from the heat treatment temperature (T) to room temperature may take, for example, about 1 hour to about 5 hours.

In one or more embodiments, according to a second condition, for example, hydrogen may be first supplied to a reactor loaded with a second metal oxide represented by $M_aO_c$ (0<a≤3 and 0<c≤4, wherein if (e.g., when) a is 1, 2, or 3, c is an integer), before elevating a temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing a heat treatment for the duration of a certain reaction time at the heat treatment temperature (T), methane gas may be supplied and the heat treatment may be carried out for the remainder of the reaction time. The reaction time may be, for example, about 4 hours to about 8 hours. The heat-treated product may be cooled to room temperature to produce a composite. Nitrogen may be supplied during the process of cooling. The process of cooling from the heat treatment temperature (T) to room temperature may take, for example, about 1 hour to about 5 hours.

In one or more embodiments, according to a third condition, for example, hydrogen may be first supplied to a reactor loaded with a second metal oxide represented by $M_aO_c$ (0<a≤3 and 0<c≤4, wherein if (e.g., when) a is 1, 2, or 3, c is an integer), before elevating a temperature to a heat treatment temperature (T). The heat treatment temperature (T) may be reached over a duration of about 10 minutes to about 4 hours, and the heat treatment temperature (T) may be in a range of about 700 °C to about 1,100 °C. After performing a heat treatment for the duration of a certain reaction time at the heat treatment temperature (T), a mixed gas of methane and hydrogen may be supplied, and the heat treatment may be carried out for the remainder of the reaction time. The reaction time may be, for example, about 4 hours to about 8 hours. The heat-treated product may be cooled to room temperature to produce a composite. Nitrogen may be supplied during the process of cooling. The process of cooling from the heat treatment temperature (T) to room temperature may take, for example, about 1 hour to about 5 hours.

If (e.g., when) the carbon source gas includes water vapor in the process of producing the composite, the composite with excellent or suitable conductivity may be obtained. The content (e.g., amount) of water vapor in the gas mixture is not limited and may be, for example, in one or more embodiments, about 0.01 vol% to about 10 vol% with respect to 100 vol% of a total volume of the carbon source gas. For example, the carbon source gas may be methane; a mixed gas containing methane and an inert gas; or a mixed gas containing methane and an oxygen-containing gas.

For example, in one or more embodiments, the carbon source gas may be methane; a mixed gas of methane and carbon dioxide; or a mixed gas of methane, carbon dioxide, and water vapor. In the mixed gas of methane and carbon dioxide, a molar ratio of methane and carbon dioxide may be about 1:0.20 to about 1:0.50, about 1:0.25 to about 1:0.45, or about 1:0.30 to about 1:0.40. In the mixed gas of methane, carbon dioxide, and water vapor, a molar ratio of methane, carbon dioxide, and water vapor may be about 1 : about 0.20 to about 0.50 : about 0.01 to about 1.45, about 1 : about 0.25 to about 0.45 : about 0.10 to about 1.35, or about 1 : about 0.30 to about 0.40 : about 0.50 to about 1.0.

In some embodiments, the carbon source gas may be, for example, carbon monoxide or carbon dioxide. In some embodiments, the carbon source gas may be, for example, a mixed gas of methane and nitrogen. In the mixed gas of methane and nitrogen, a molar ratio of methane and nitrogen may be about 1:0.20 to about 1:0.50, about 1:0.25 to about 1:0.45, or about 1:0.30 to about 1:0.40. In some embodiments, the carbon source gas may not include(e.g., may exclude) an (or any) inert gas such as nitrogen.

In one or more embodiments, a heat treatment pressure may be selected in consideration of a heat treatment temperature, a composition of a gas mixture, a desired or suitable amount of carbon coating, and/or the like. The heat treatment pressure may be controlled or selected by adjusting an incoming amount of a gas mixture and an outgoing amount of the gas mixture. The heat treatment pressure may be, for example, 0.5 atm or more, 1 atm or more, 2 atm or more, 3 atm or more, 4 atm or more, or 5 atm or more.

A heat treatment time is not particularly limited and may be appropriately adjusted according to a heat treatment temperature, a heat treatment pressure, a composition of a gas mixture, and a desired or suitable amount of carbon coating. For example, in some embodiments, the reaction time at the heat treatment temperature may be, for example, about 10 minutes to about 100 hours, about 30 minutes to about 90 hours, or about 50 minutes to about 40 hours. For example, as the heat treatment time increases, an amount of carbon deposited, for example, graphene amount, may increase, and thus the electrical properties of the composite may improve. It should be noted that this trend may not necessarily be directly proportional to time. For example, after a certain period of time, carbon deposition, for example, graphene deposition may no longer take place, or the deposition rate may decrease.

Through a gas-phase reaction of the carbon source gas described above, even at relatively low temperatures, the undoped composite may be obtained by providing substantially uniform coating of a carbonaceous material, e.g., graphene coating, to one or more selected from among a second metal oxide represented by $M_aO_c$ (0<a≤3 and 0<c≤4, wherein if (e.g., when) a is 1, 2, or 3, c is an integer) and a reduction product thereof, a first metal oxide represented by $M_aO_b$ (0<a≤3 and 0<b<4, wherein if (e.g., when) a is 1, 2, or 3, b is not an integer).

The composite may include, for example, a matrix of a carbonaceous material, for example, a graphene matrix, which has at least one structure selected from among a spherical structure (e.g., a substantially spherical structure), a spiral structure having a plurality of spherical structures (e.g., substantially spherical structures) connected to one another, a cluster structure having a plurality of spherical structures (e.g., substantially spherical structures) agglomerated, and a sponge structure; and at least one selected from among a first metal oxide represented by $M_aO_b$ (0<a≤3 and 0<b<4, wherein if (e.g., when) a is 1, 2, or 3, and b is not an integer) and a second metal oxide represented by $M_aO_b$ (0<a≤3 and 0<c≤4, wherein if (e.g., when) a is 1, 2, or 3, c is an integer), disposed within the matrix of the carbonaceous material.

Subsequently, the lithium-containing sulfide-based cathode active material, the composite, and the first carbonaceous material may be mechanically milled.

For the milling, a Nobilta mixer, a planetary mixer, and/or the like may be utilized. The rotation rate of the mixer during the milling may be, for example, 1,000 rpm to 2,500 rpm. If (e.g., when) the milling speed is less than 1,000 rpm, the shear force applied to a lithium transition metal oxide and the composite may be too weak to give rise to formation of a chemical bond between the lithium transition metal oxide and the composite. If (e.g., when) the milling speed is too high, the composite formation process may proceed over an excessively short time, making it difficult to achieve the formation of a substantially uniform and substantially continuous shell from substantially uniform coating of the composite on the lithium-containing sulfide-based cathode active material and/or a lithium transition metal oxide. The milling time may be, for example, about 5 minutes to about 100 minutes, about 5 minutes to about 60 minutes, or about 5 minutes to about 30 minutes. If (e.g., when) the milling time is too short, the formation of a substantially uniform and substantially continuous shell from substantially uniform coating of the composite on the lithium-containing sulfide-based cathode active material and/or a lithium transition metal oxide may be difficult to achieve. If (e.g., when) the milling time is too long, production efficiency may decrease. An amount of the composite may be 3 wt% or less, 2 wt% or less, or 1 wt% or less with respect to the total weight of the lithium-containing sulfide-based cathode active material and/or a lithium transition metal oxide and the composite. In some embodiments, the amount of the composite may be, for example, 40 wt% or less, about 10 wt% to about 40 wt%, about 20 wt% to about 40 wt%, or about 25 wt% to about 40 wt%, with respect to the total weight of the lithium-containing sulfide-based cathode active material and/or a lithium transition metal oxide and the composite. For example, the amount of the composite may be 40 parts by weight or less, about 10 parts by weight to about 40 parts by weight, about 20 parts by weight to about 40 parts by weight, or about 25 parts by weight to about 40 parts by weight with respect to 100 parts by weight of the mixture of the lithium-containing sulfide-based cathode active material and/or a lithium transition metal oxide and the composite.

The composite utilized for mechanical milling may have an average particle diameter (D50) of, for example, about 1 μm to about 20 μm, about 3 μm to about 15 μm, or about 5 μm to about 10 μm.

As utilized herein, a and b in "$C_a$-$C_b$" represent the number of carbon atoms in a functional group. Here, the functional group may include a to b number of carbon atoms. For example, "$C_1$-$C_4$ alkyl group" refers to an alkyl group having 1 to 4 carbon atoms, such as $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, or $(CH_3)_3C$-.

The present disclosure will be described in greater detail through the following examples and comparative examples. However, it will be understood that the examples are provided only to illustrate the present disclosure and not to be construed as limiting the scope of the present disclosure.

**Preparation of Composite**

**Preparation Example 1: $Al_2O_3$@Gr Composite**

$Al_2O_3$ particles (average particle diameter: about 20 nm) were loaded into a reactor, and with $CH_4$ being supplied into the reactor at 300 sccm (i.e., standard cubic centimeters per minute) and 1 atm for about 30 minutes, the temperature inside the reactor was elevated to 1,000 °C.

Subsequently, a heat treatment was performed while maintaining the above temperature for 7 hours. Then, the temperature inside the reactor was adjusted to room temperature (20-25 °C) to produce a composite having $Al_2O_3$ particles and its reduction product, $Al_2O_z$ (0<z<3) particles, embedded in graphene.

The amount of alumina included in the composite was 60 wt%.

**Preparation Example 2: Al$_2$O$_3$@Gr Composite**

A composite was prepared following substantially the same process as Preparation Example 1, except that Al$_2$O$_3$ particles (average particle diameter: about 200 nm) were utilized instead of the Al$_2$O$_3$ particles (average particle diameter: about 20 nm).

**Comparative Preparation Example 1: SiO$_2$@Gr Composite**

SiO$_2$ particles (average particle diameter: about 15 nm) were loaded into a reactor, and with CH$_4$ being supplied into the reactor at 300 sccm and 1 atm for about 30 minutes, the temperature inside the reactor was elevated to 1,000 °C.
Subsequently, a heat treatment was performed while maintaining the above temperature for 7 hours. Then, the temperature inside the reactor was adjusted to room temperature (20-25 °C) to produce a composite having SiO$_2$ particles and its reduction product, SiO$_y$ (0<y<2) particles, embedded in graphene.

**Preparation of Composite Cathode Active Material**

**Example 1: Al$_2$O$_3$-GB coated Li$_2$S composite cathode active material, Al$_2$O$_3$-GB 40 wt% coating**

Li$_2$S having an average particle diameter of 10 μm and the composite (Al$_2$O$_3$-GB) prepared in Preparation Example 1 were milled at a rotation rate of about 500 rpm for about 10 hours utilizing a planetary mixer to produce a composite cathode active material. Li$_2$S and the composite prepared in Preparation Example 1 were mixed in a weight ratio of 60:40. The amount of Al$_2$O$_3$-GB was 40 wt% with respect to 100 wt% of the composite cathode active material.

**Example 2: Al$_2$O$_3$-GB coated Li$_2$S composite cathode active material, Al$_2$O$_3$-GB 25 wt% coating**

A composite cathode active material was prepared following substantially the same process as in Example 1, except that the amount of Al$_2$O$_3$-GB was changed to 25 wt% with respect to 100 wt% of the composite cathode active material.

**Example 3: Al$_2$O$_3$-GB coated Li$_2$S composite cathode active material, Al$_2$O$_3$-GB 10 wt% coating**

A composite cathode active material was prepared following substantially the same process as in Example 1, except that the amount of Al$_2$O$_3$-GB was changed to 10 wt% with respect to 100 wt% of the composite cathode active material.

**Example 3a: Al$_2$O$_3$-GB coated Li$_2$S-C-LiI composite cathode active material, Al$_2$O$_3$-GB 40 wt% coating**

A composite cathode active material was prepared in the same manner as in Example 1, except that a Li$_2$S-C-LiI composite was used as a cathode active material instead of a Li$_2$S.
A Li$_2$S-C-LiI composite was prepared according to a preparing method of Li$_2$S-C-Li$_6$PS$_5$Cl composite disclosed in Nano Lett. 2016, 16, 7, 4521-4527, except that Li6PS5Cl was changed into LiI.
**Example 3b: Al$_2$O$_3$-GB coated Li$_2$S-CNF composite cathode active material, Al$_2$O$_3$-GB 40 wt% coating**A composite cathode active material was prepared in the same manner as in Example 1, except that a Li$_2$S-carbon-nanofiber (CNF) composite was used as a cathode active material instead of a Li$_2$S.
A Li$_2$S-CNF composite was prepared according to a preparing method of **Li$_2$S-**VGCF(vapor grown carbon fiber) **composite** disclosed in Electrochimica Acta 230 (2017) 279-284, except that VGCF was changed into CNF(carbon nanofiber).

**Comparative Example 1: Bare Li$_2$S composite cathode active material**

Li$_2$S having an average particle diameter of 10 μm was utilized as a cathode active material and milled at a rotation rate of about 500 rpm for about 10 hours.

**Comparative Example 2: TWCNT-coated Li$_2$S composite cathode active material, TWCNT 40 wt% coating**

A composite cathode active material was prepared following substantially the same process as in Example 1, except that triple-walled carbon nanotubes (TWCNTs) were utilized instead of the composite ($Al_2O_3$-GB) prepared in Preparation Example 1.

**Comparative Example 3: Graphene-coated $Li_2S$ composite cathode active material**

A composite cathode active material was prepared following substantially the same process as in Example 1, except that graphene was utilized instead of the composite ($Al_2O_3$-GB) prepared in Preparation Example 1.

**Comparative Example 4: $Al_2O_3$-coated $Li_2S$ composite cathode active material**

A composite cathode active material was prepared following substantially the same process as in Example 1, except that $Al_2O_3$ was utilized instead of the composite ($Al_2O_3$-GB) prepared in Preparation Example 1.

**Comparative Example 5: $Al_2O_3$- and graphene-coated $Li_2S$ composite cathode active material**

A composite cathode active material was prepared following substantially the same process as in Example 1, except that $Al_2O_3$ and graphene were utilized instead of the composite ($Al_2O_3$-GB) prepared in Preparation Example 1.

Table 1

| Item | Composition | $Li_2S$ (parts by weight) | GB (parts by weight) | TWCNT (parts by weight) |
|---|---|---|---|---|
| Example 1 | $Li_2S$+GB | 27 | 18 | |
| Example 2 | $Li_2S$+GB | 27 | 9 | |
| Comparati ve Example 1 | $Li_2S$ | 27 | | |
| Comparati ve Example 2 | $Li_2S$+TWCNT | 27 | | 18 |

Table 2

| Item | Composition | $Li_2S$ (parts by weight) | GB (parts by weight) | $Al_2O_3$ (parts by weight) | Graphene (parts by weight) |
|---|---|---|---|---|---|
| Example 1 | $Li_2S$+GB | 27 | 18 | | |
| Compar ative Example 3 | $Li_2S$+Graphene | 27 | | | 4.5 |
| Compar ative Example 4 | $Li_2S$+$Al_2O_3$ | 27 | | 13.5 | |
| Compar ative Example 5 | $Li_2S$+$Al_2O_3$+Graphen e | 27 | | 13.5 | 4.5 |

The amount of each component is shown in Tables 1 and 2.

**Example 4: All-Solid Secondary Battery**

**Preparation of Anode Layer**

A 10 $\mu$m-thick SUS foil was prepared as an anode current collector. In addition, carbon black (CB) having a primary particle diameter of about 30 nm and silver (Ag) particles having an average particle diameter of about 60 nm were prepared as anode active materials.

In a vessel containing 4 grams of mixed powder containing carbon black (CB) and silver (Ag) particles in a weight ratio of 3:1, 4 grams of an NMP solution containing 7 wt% of a PVDF binder (#9300, KUREHA) were added to thereby prepare a mixed solution. Subsequently, while gradually adding NMP to this mixed solution, the mixed solution was stirred to produce a slurry. The produced slurry was applied to a SUS sheet utilizing a bar coater, and dried in open air at 80 °C for 10 minutes. The laminate thus obtained was vacuum-dried at 40 °C for 10 hours. The dried laminate was subjected to a cold roll press at a pressure of 5 ton·f/cm$^2$ and a rate of 5 m/sec to flatten the surface of a first anode active material layer of the laminate. Through the above process, an anode layer was prepared. The thickness of the first anode active material layer included in the anode layer was about 15 $\mu$m. The first anode active material layer and the anode current collector had the same surface area. An initial charge capacity of the anode was measured by the half-cell as described above. An initial charge capacity of the first anode active material layer was 2.3 mAh.

**Preparation of Cathode Layer**

As a cathode active material, the composite cathode active material prepared in Example 1 was utilized. As a solid electrolyte, argyrodite-type or kind crystals, $Li_6PS_5Cl$ (D50=3.0 $\mu$m, crystalline), were prepared. As a conductive material, carbon nanofibers (CNF) were prepared. The above components were mixed in a weight ratio of composite cathode active material: solid electrolyte : conductive material= 45 : 45 : 10, to thereby produce a cathode mixture. The cathode mixture was obtained by dry mixing, utilizing a ball mill. The cathode mixture obtained from ball-milling formed ionically conductive and electronically conductive networks.

The cathode mixture was placed on one side of a cathode current collector composed of SUS or an aluminum foil carbon-coated on one side and was then plate-pressed for 10 minutes with a pressure of 200 MPa, to thereby produce a cathode layer. The thickness of the cathode layer was about 120 $\mu$m. The thickness of the cathode active material layer was about 100 $\mu$m, and the thickness of the carbon-coated aluminum foil was about 20 $\mu$m. The cathode active material layer and the cathode current collector had the same surface area. An initial charge capacity of the cathode was measured by the half-cell as described above. An initial charge capacity of the cathode active material layer was 25 mAh. For Example 1, a ratio (B/A) of initial charge capacity (B) of the first anode active material layer to initial charge capacity (A) of the cathode active material layer was about 0.09. The initial charge capacity of the cathode active material layer determined by charging from a first open circuit voltage to a maximum charging voltage of 2.8 V vs. Li/Li+. Further, the initial charge capacity of the first anode active material layer determined by charging from a second open circuit voltage to 0.01 V vs. Li/Li+.

**Preparation of Solid Electrolyte Layer**

In argyrodite-type or kind crystal $Li_6PS_5Cl$ solid electrolyte ($D_{50}$=3.0 $\mu$m, crystalline), 1.5 parts by weight of an acryl-based binder with respect to 98.5 parts by weight of the solid electrolyte was added to prepare a mixture. The prepared mixture, while adding octyl acetate thereto, was stirred to prepare a slurry. The prepared slurry was applied on a 15-$\mu$m thick nonwoven fabric placed on a 75 $\mu$m-thick PET (polyethylene) substrate by utilizing a bar coater, and dried in open air at a temperature of 80 °C for 10 minutes to produce a laminate. The laminate thus obtained was vacuum-dried at a temperature of 80 °C for 2 hours. Through the above process, a solid electrolyte layer was prepared.

**Preparation of All-Solid Secondary Battery**

On the bottom of a vessel/container, as an anode layer, a SUS (stainless steel) current collector and a Li-In alloy foil were placed, and the solid electrolyte layer was placed to thereby form a laminate. By rotating the lid of the vessel/container, the prepared laminate was pressed to thereby form a torque cell. By such a press treatment, the solid electrolyte layer may be sintered, improving battery characteristics.

The solid electrolyte layer was placed such that the first anode active material layer comes in contact with the solid electrolyte layer on the anode layer, and the cathode layer was placed on the solid electrolyte layer, to thereby produce a stack.

The prepared stack was plate-pressed at 85 °C with a pressure of 500 MPa for 30 minutes. By such a press treatment, the solid electrolyte layer may be sintered, thereby improving battery characteristics. The thickness of the sintered solid electrolyte layer was about 45 $\mu$m. The density of the argyrodite-type or kind crystals, $Li_6PS_5Cl$ solid electrolyte, included in the sintered solid electrolyte layer was 1.6 g/cc. The surface area of the solid electrolyte layer was the same as that of the anode layer.

The pressed stack was placed in a pouch and vacuum-sealed to thereby produce an all-solid secondary battery. Parts of the cathode current collector and anode current collector were extended out of the sealed battery and utilized as a cathode layer terminal and an anode layer terminal, respectively.

**Examples 5 and 6**

An all-solid secondary battery was prepared following substantially the same method as in Example 4, except that as the composite cathode active material for preparing the cathode layer, the composite cathode active materials prepared in Examples 2 and 3 were each respectively utilized instead of the composite cathode active material prepared in Example 1.

**Example 6a and Example 6b**

An all-solid secondary battery was prepared following substantially the same method as in Example 4, except that as the composite cathode active material for preparing the cathode layer, the composite cathode active materials prepared in Examples 3a and 3b were each respectively utilized instead of the composite cathode active material prepared in Example 1.

Example 7:

An all-solid secondary battery was manufactured in the same manner as in Example 4, except that the following carbon black on which silver particles were supported was used as an anode active material instead of a mixture of carbon black and silver particles.

(Preparation of silver particle-supported carbon black)

Carbon black was dispersed in a 1.0 M solution of a sulfuric acid, stirred for 2 hours, filtered and dried to prepare acid-treated carbon black.

10 g of the acid-treated carbon black was introduced into a mixed solvent of 1,500 g of distilled water, 1,500 g of ethanol, and 30 g of glycerol and stirred, and then 2 g of AgNOs was introduced and stirred to prepare a mixed solution. Carbon black had a particle diameter of 80 nm. A reducing agent was introduced into the mixed solution to reduce and support silver ions on the carbon black. The carbon black on which silver-containing particles were supported was filtered, cleaned, and dried to prepare a composite anode active material. As scanning electron microscope and X-ray photoelectron spectroscopy (XPS) measurement results, it was confirmed that a plurality of silver-containing particles were supported on carbon black particles. The silver-containing particles included silver particles, silver oxide ($Ag_2O$) particles, and composite particles of silver (Ag) and silver oxide ($Ag_2O$). A content of the silver-containing particles included in a composite anode active material was 5 wt%. The silver particles had an average particle diameter of 10 nm.

Example 6: Sulfide-based cathode active material (LiS-C-LiI composite), flame retardant first inactive member

An all-solid secondary battery was manufactured in the same manner as in Example 1, except that a $Li_2S$-C-LiI composite was used as a cathode active material instead of a $Li_2S$-VGCF composite.
A $Li_2S$-C-LiI composite was prepared according to a method disclosed in Nano Lett. 2016, 16, 7, 4521-4527, except that Li6PS5Cl was changed into LiI. **Comparative Examples 6-10**
An all-solid secondary battery was prepared following substantially the same method as in Example 4, except that as the composite cathode active material for preparing the cathode layer, the composite cathode active materials prepared in Comparative Examples 1 to 5 were each respectively utilized instead of the composite cathode active material prepared in Example 1.

**Evaluation Example 1: SEM, HR-TEM, and SEM-EDS Analyses**

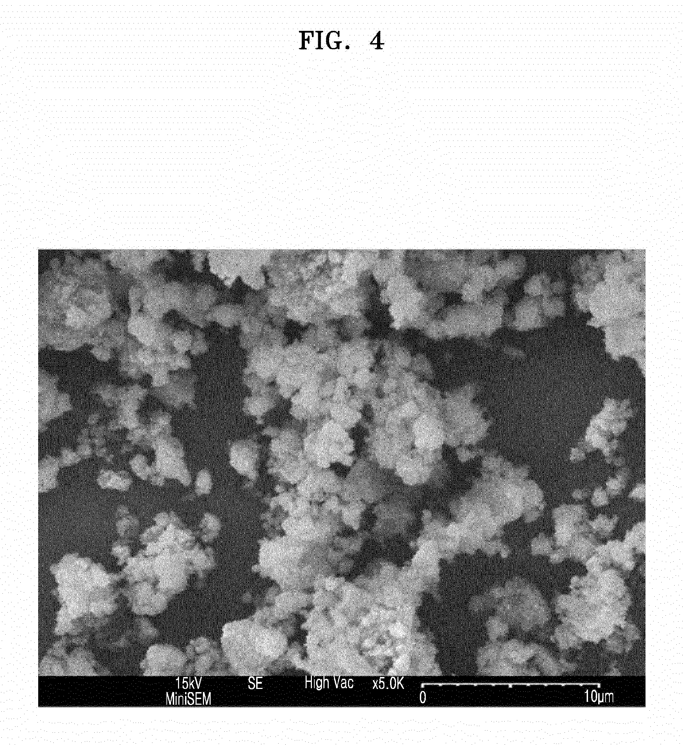

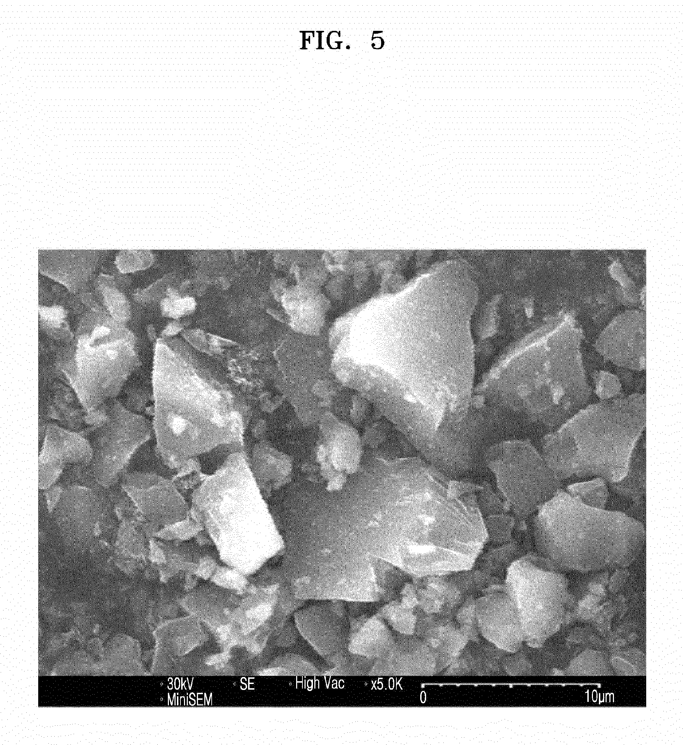

The composite cathode active material prepared in Example 1 was analyzed utilizing scanning electron microscopy (SEM), high-resolution transmission electron microscopy (HR-TEM), and energy-dispersive X-ray spectroscopy (SEM-EDS). For the SEM-EDS analysis, FEI Titan 80-300 by PHILLIPS was utilized.
The composite prepared in Preparation Example 1 was found to have a structure in which $Al_2O_3$ particles and its reduced product, $Al_2O_z$ (0<z<3) particles, were embedded in graphene. It was confirmed that a graphene layer was disposed on the outside of at least one of the $Al_2O_3$ particles and/or its reduced product, $Al_2O_z$ (0<z<3) particles. At least one particle selected from among the $Al_2O_3$ particles and its reduced product, $Al_2O_z$ (0<z<3) particles, was uniformly distributed in the graphene matrix. The particle diameter of at least one of the $Al_2O_3$ particles and/or its reduced product, $Al_2O_z$ (0<z<3) particles, was about 20 nm. The particle diameter of the composite prepared in Preparation Example 1 was about 50 nm to 200 nm.
As shown in FIG. 4, it was found that in the composite anode active material prepared in Example 1, a shell including the composite was disposed on the lithium sulfide core. FIG. 5 is a SEM image of lithium sulfide.
The composite cathode active material prepared in Example 1 was analyzed by SEM-EDS mapping.
The analysis showed the presence of aluminum (Al) distributed on the surface of the composite cathode active material of Example 1. From this result, it was confirmed that the composite prepared in Preparation Example 1 was uniformly coated on the core to form a shell in the composite cathode active material.

**Evaluation Example 2: Lifespan characteristics test**

The all-solid secondary batteries prepared in Examples 4 to 6, Example 6a, Example 6b, Example 7, and Comparative Example 6 were each evaluated for charge-discharge characteristics by a cycling test as follows. The cycling test was performed with each of the all-solid secondary batteries placed in a constant-temperature bath at 45 °C.

In the first cycle, each battery was charged with a constant current of 0.05 C rate until the battery voltage reached a voltage of 2.5 V to 2.8 V. Subsequently, the battery was discharged with a constant current of 0.05 C rate until the battery voltage reached 0.3 V.

The discharge capacity at the first cycle was utilized as the standard capacity. After the second cycle, charging and discharging were performed up to 30 cycles under the same conditions as the first cycle. The results of the measurement are shown in Table 3.

Throughout the charge-discharge cycles above, a rest period of 10 minutes was provided after each charge/discharge cycle. A part of the results of the high-temperature cycling test is shown in Table 3. Capacity retention ratio is defined by Equation 1.

## Equation 1

$$\text{Capacity Retention Ratio [\%]} = [\text{Discharge Capacity in 30}^{th}\text{ cycle / Discharge Capacity in 1}^{st}\text{ cycle]} \times 100$$

Table 3

| Item | Specific Capacity (mAh/g) | Capacity Retention Ratio [%] |
|---|---|---|
| Example 4 (Example 1, Li2S+40 wt% $Al_2O_3$-GB coating) | 828 | 54 |
| Example 5 (Example 2, Li2S+25 wt% $Al_2O_3$-GB coating) | 820 | 52 |
| Example 6a (Example 3a, Li2S-C-LiI +40 wt% $Al_2O_3$-GB coating) | 854 | 64 |
| Example 6b (Example 3b, Li2S-CNF +40 wt% $Al_2O_3$-GB coating) | 750 | 52 |
| Example 7 (silver particle-supported carbon black including anode layer) | 835 | 55 |
| Comparative Example 6 (Comparative Example 1, bare $Li_2S$) | 9 | - |
| Comparative Example 7 (Comparative Example 2, CNT coating) | 454 | 40 |
| Comparative Example 8 (Comparative Example 3, Graphene coating) | 455 | 42 |
| Comparative Example 9 (Comparative Example 4, $Al_2O_3$ coating) | 11 | - |
| Comparative Example 10 (Comparative Example 5, $Al_2O_3$-Graphene coating) | 787 | 27 |

As shown in Table 3, the all-solid secondary batteries of Examples 4 and 5 show improved specific capacity characteristics compared to the all-solid secondary batteries of Comparative Examples 6 to 10. Further, the all-solid secondary batteries of Examples 4 and 5 show excellent or suitable lifespan characteristics as shown in Table 3. Further, although not shown in the table, the all-solid secondary battery of Example 6 showed excellent or suitable lifespan characteristics and improved specific capacity characteristics compared to the all-solid secondary batteries of Comparative Examples 6 to 10.

Also, the all-solid secondary batteries of Examples 6a, 6b, and 7 show improved specific capacity characteristics compared to the all-solid secondary batteries of Comparative Examples 6 to 10.

**Evaluation Example 3: Initial Charge Voltage**

The initial voltage after charging and grain size of lithium sulfide in each of the all-solid secondary batteries of Example 4 and Comparative Examples 6 to 10 are shown in Tables 4 and 5.

When measuring the initial voltage after charging, charging was performed under the same conditions as the first cycle charging conditions as in Evaluation Example 2. In particular, the grain size of lithium sulfide was confirmed by X-ray diffraction analysis. Specific XRD analysis equipment/conditions are as described in Table 4.

Table 4

| XRD(X-Ray Diffractometer) EMPYREAN | |
| --- | --- |
| Maker | PANalytical |
| Anode material | Cu |
| K-Alpha1 wavelength | 1.540598 Å |
| Generator voltage | 45 Kv |
| Tube current | 40 mA |
| Scan Range | 3-80° |
| Scan Step Size | 0.01° |
| Divergence slit | 1/4° |
| Antiscatter slit | 1/2° |

Table 5

| Item | $Li_2S$ grain size (nm) | Initial voltage after charging (V) |
| --- | --- | --- |
| Example 4 (Example 1 $Li_2S$+GB) | 9.89 | 1.72 |
| Comparative Example 6 (Comparative Example 1 $Li_2S$) | 15.42 | 2.82 |
| Comparative Example 7 (Comparative Example 2 $Li_2S$+TWCNT) | 26.88 | 2.06 |

Table 6

| Class | $Li_2S$ grain size (nm) | Initial charge voltage (V) |
| --- | --- | --- |
| Example 4 (Example 1, $Li_2S$+GB) | 9.89 | 1.72 |
| Comparative Example 8 (Comparative Example 3, $Li_2S$+Graphene) | 24.3 | 1.94 |
| Comparative Example 9 (Comparative Example 4, $Li_2S$+$Al_2O_3$) | 7.69 | 2.82 |
| Comparative Example 10 (Comparative Example 5, $Li_2S$+$Al_2O_3$+Graphene) | 11.6 | 1.76 |

As shown in Tables 5 and 6, in the all-solid secondary battery of Example 4, due to a pulverization effect utilizing GB, the $Li_2S$ particles were atomized during the preparation of the composite cathode active material, and as a result, the all-solid secondary battery of Example 4 shows a low initial charging voltage due to a small grain size and low resistance, compared to Comparative Examples 6 to 10.

According to one or more embodiments of the present disclosure, an all-solid secondary battery with improved capacity and lifespan characteristics may be provided by utilizing the composite cathode active material according to one or more embodiments.

As utilized herein, the terms "substantially," "about," and similar terms are used as terms of approximation and not as terms of degree, and are intended to account for the inherent deviations in measured or calculated values that would be recognized by those of ordinary skill in the art.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

In the present disclosure, when particles, nanotubes, structures, etc., are spherical or circular, "size" or "diameter" indicates a particle, nanotube, or structure diameter or an average particle, nanotube, or structure diameter, and when the particles, nanotubes, structures, etc., are non-spherical or non-circular, the "size" or "diameter" indicates a major axis length or an average major axis length. For example, when particles are spherical, "diameter" indicates a particle diameter, and when the particles are non-spherical, the "diameter" indicates a major axis length. The size or diameter of the particles may be measured utilizing a scanning electron microscope or a particle size analyzer. As the particle size analyzer, for example, HORIBA, LA-950 laser particle size analyzer, may be utilized. When the size of the particles is measured utilizing a particle size analyzer, the average particle diameter (or size) is referred to as D50. D50 refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the spirit and scope of the disclosure as defined by the appended claims and equivalents thereof.

**Claims**

1. A composite cathode active material (100) comprising:

   a core (1) comprising a lithium-containing sulfide-based cathode active material; and
   a shell (2) conforming to a surface of the core (1),
   wherein the shell (2) comprises a first metal oxide (221) represented by formula $M_aO_b$ ($0<a\leq3$ and $0<b<4$, if a is 1, 2, or 3, b is not an integer), and a carbonaceous material, and
   wherein the first metal oxide (221) is within a matrix of the carbonaceous material, and M is at least one metal selected from among Groups 2 to 16 in the Periodic Table of Elements.

2. The composite cathode active material (100) as claimed in claim 1,

   wherein the at least one metal included in the first metal oxide (221) is at least one metal selected from among Al, Nb, Mg, Sc, Ti, Zr, V, W, Mn, Fe, Co, Pd, Cu, Ag, Zn, Sb, Si, and Se; or
   wherein the first metal oxide (221) is at least one selected from among $Al_2O_z$ ($0<z<3$), $NbO_x$ ($0<x<2.5$), $MgO_x$ ($0<x<1$), $Sc_2O_z$ ($0<z<3$), $TiO_y$ ($0<y<2$), $ZrO_y$ ($0<y<2$), $V_2O_z$ ($0<z<3$), $WO_y$ ($0<y<2$), $MnO_y$ ($0<y<2$), $Fe_2O_z$ ($0<z<3$), $Co_3O_w$ ($0<w<4$), $PdO_x$ ($0<x<1$), $CuO_x$ ($0<x<1$), $AgO_x$ ($0<x<1$), $ZnOx$ ($0<x<1$), $Sb_2O_z$ ($0<z<3$), $SiO_z$ ($0<z<2$), and $SeO_y$ ($0<y<2$).

3. The composite cathode active material (100) as claimed in claim 1 or 2,

   wherein the shell (2) further comprises a second metal oxide represented by formula $M_aO_c$ ($0<a\leq3$ and $0<c\leq4$, wherein if a is 1, 2, or 3, c is an integer),
   wherein the second metal oxide comprises the same metal as the first metal oxide (221), and
   wherein a ratio of c to a of the second metal oxide, c/a, has a greater value than a ratio of b to a of the first metal oxide (221), b/a.

**4.** The composite cathode active material (100) as claimed in claims 1 to 3,

wherein the shell (2) further comprises a second metal oxide represented by formula $M_aO_c$ ($0<a\leq3$ and $0<c\leq4$, wherein if a is 1, 2, or 3, c is an integer),
wherein the second metal oxide is selected from among $Al_2O_3$, NbO, $NbO_2$, $Nb_2O_5$, MgO, $Sc_2O_3$, $TiO_2$, $ZrO_2$, $V_2O_3$, $WO_2$, $MnO_2$, $Fe_2O_3$, $Co_3O_4$, PdO, CuO, AgO, ZnO, $Sb_2O_3$, $SiO_2$, and $SeO_2$, preferably, wherein the first metal oxide (221) is a reduction product of the second metal oxide.

**5.** The composite cathode active material (100) as claimed in claims 1 to 4,

wherein the carbonaceous material comprises a carbon-based nanostructure,
the carbon-based nanostructure comprises a two-dimensional carbon-based nanostructure, and
the two-dimensional carbon-based nanostructure comprises graphene.

**6.** The composite cathode active material (100) as claimed in claims 1 to 5,

wherein the core (1) further comprises a lithium transition metal oxide, and
wherein:

the carbonaceous material in the shell (2) and a transition metal of the lithium transition metal oxide in the core (1) are chemically bound by a chemical bond;
carbon (C) atoms of the carbonaceous material in the shell (2) and the transition metal (Me) of the lithium transition metal oxide are chemically bound through a C-O-Me bond via an oxygen atom; or
the first metal oxide (221) is chemically bound to the carbonaceous material by a chemical bond, and/or
wherein an amount of a composite comprising the first metal oxide (221) and the carbonaceous material is 40 wt% or less with respect to 100 wt% of a total weight of the composite cathode active material (100).

**7.** The composite cathode active material (100) as claimed in claims 1 to 6,

further comprising a third metal doped on the core (1), or a third metal oxide coated on the core (1),
wherein the shell (2) is on the third metal oxide, and
the third metal oxide is an oxide of at least one third metal selected from among Al, Zr, W, and Co, preferably, wherein the shell (2) further comprises a solid electrolyte, and the solid electrolyte is a sulfide-based solid electrolyte, an oxide-based solid electrolyte, a polymer solid electrolyte, or a combination thereof.

**8.** The composite cathode active material (100) as claimed in claims 1 to 7, wherein the lithium-containing sulfide-based cathode active material comprises $Li_2S_n$ ($n\geq1$), a composite containing $Li_2S_n$ ($n\geq1$), or a combination thereof, and the a composite containing $Li_2S_n$ ($n\geq1$) comprises a composite of $Li_2S$ and carbon, a composite of $Li_2S$, carbon, and a solid electrolyte, a composite of $Li_2S$ and a solid electrolyte, a composite of $Li_2S$, carbon, and a lithium salt, a composite of $Li_2S$ and a lithium salt, a composite of $Li_2S$ and a metal carbide, a composite of $Li_2S$, carbon, and a metal carbide, a composite of $Li_2S$ and a metal nitride, a composite of $Li_2S$, carbon, and a metal nitride, or a combination thereof.

**9.** A cathode comprising the composite cathode active material (100) as claimed in claims 1 to 8, preferably, wherein the cathode further comprises a solid electrolyte.

**10.** An all-solid secondary battery comprising:

a cathode layer (10);
an anode layer (20); and
a solid electrolyte layer (30) between the cathode layer (10) and the anode layer (20) and comprising a solid electrolyte,
wherein the cathode layer (10) comprises the cathode as claimed in claim 9 .

**11.** The all-solid secondary battery as claimed in claim 10,

wherein the electrolyte comprises a solid electrolyte, a gel electrolyte or a combination thereof,
the solid electrolyte comprises a sulfide-based solid electrolyte, an oxide-based solid electrolyte, a polymer solid electrolyte, or a combination thereof, and
the solid electrolyte layer (30) is substantially impermeable to lithium polysulfide.

12. The all-solid secondary battery as claimed in claims 10 or 11,

wherein an electrode current collector (21) of each of the cathode layer (10) and the anode layer (20) comprises a base film and a metal film on one side or both sides of the base film, and
wherein the base film comprises a polymer, the polymer comprising polyethylene terephthalate, polyethylene, polypropylene, polybutylene terephthalate, polyimide, or a combination thereof, and
the metal layer comprises indium, copper, magnesium, titanium, iron, cobalt, nickel, zinc, aluminum, germanium, lithium, or an alloy thereof.

13. The all-solid secondary battery as claimed in claims 10 to 12,

wherein the anode layer (20) comprises an anode current collector (21) and a first anode active material layer (22) on one side of the anode current collector (21),
the first anode active material layer (22) comprises an anode active material and a binder,
the anode active material comprises at least one selected from among a carbon-based anode active material and a metal or metalloid anode active material,
the carbon-based anode active material comprises amorphous carbon, crystalline carbon, porous carbon, or a combination thereof, and
the metal or metalloid anode active material comprises gold, platinum, palladium, silicon, silver, aluminum, bismuth, tin, zinc, or a combination thereof.

14. The all-solid secondary battery as claimed in claims 10 to 13,

wherein the anode active material comprises a carbon-based support and a metal-based anode active material supported on the carbon-based support, wherein the metal-based anode active material comprises a metal, a metal oxide, a composite of a metal and a metal oxide, or a combination thereof, has a particle form, and has a particle diameter of about 1 nm to about 200 nm, the carbon-based support has a particle form, and a carbonaceous material has a particle diameter of about 10 nm to about 2 $\mu$m,
wherein after charged, the all-solid secondary battery further comprises a second anode active material layer (23) between the anode current collector (21) and the first anode active material layer (22), and
wherein the second anode active material layer (23) is a metal layer, the metal layer comprising lithium or a lithium alloy.

15. A method of preparing a composite cathode active material (100), the method comprising:

applying a lithium-containing sulfide-based compound;
applying a composite; and
applying a first carbonaceous material (222),
wherein the lithium-containing sulfide-based compound, the composite, and the first carbonaceous material (222) are mechanically milled to prepare the composite cathode active material (100) as claimed in claims 1 to 11,
the composite comprises the first metal oxide (221) represented by formula $M_aO_b$ (0<a$\leq$3 and 0<b<4, wherein if a is 1, 2, or 3, b is not an integer), and the first carbonaceous material (222), and
the first metal oxide (221) is in a matrix of the first carbonaceous material (222), M is at least one metal selected from among Groups 2 to 13, Group 15, and Group 16 in the Periodic Table of Elements.

# FIG. 1

# FIG. 2

# FIG. 3

# FIG. 4

# FIG. 5

Europäisches
Patentamt

European
Patent Office

Office européen
des brevets

# EUROPEAN SEARCH REPORT

Application Number

EP 23 20 7596

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2017/139993 A1 (XIAO LIFANG [CN]) 24 August 2017 (2017-08-24) * paragraph [0005] – paragraph [0043]; claims 1-3 * ----- | 1-15 | INV. H01M4/58 H01M4/62 |
| A | CN 105 609 738 A (ZHONG LINGLONG) 25 May 2016 (2016-05-25) * paragraph [0015] – paragraph [0035]; claims 1-2 * ----- | 1-15 | |

TECHNICAL FIELDS
SEARCHED      (IPC)

H01M

The present search report has been drawn up for all claims

| Place of search | Date of completion of the search | Examiner |
|---|---|---|
| Munich | 11 March 2024 | Radeck, Stephanie |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
....................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 20 7596

This annex lists the patent family members relating to the patent documents cited in the above-mentioned European search report.
The members are as contained in the European Patent Office EDP file on
The European Patent Office is in no way liable for these particulars which are merely given for the purpose of information.

11-03-2024

| Patent document cited in search report | Publication date | Patent family member(s) | Publication date |
|---|---|---|---|
| WO 2017139993 A1 | 24-08-2017 | NONE | |
| CN 105609738 A | 25-05-2016 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Nano Lett.,* 2016, vol. 16 (7), 4521-4527
- *Electrochimica Acta,* 2017, vol. 230, 279-284